# EUROPEAN PATENT SPECIFICATION

(11) **EP 2 853 367 B1**
(45) Date of publication and mention of the grant of the patent: **07.12.2022**
(21) Application number: 14186512.1
(22) Date of filing: 26.09.2014
(51) Int. Cl.: B29C 37/00, B29C 45/14, B29L 9/00

(54) **Molding process, molded printed material, process for producing in-mold molded article, in-mold molded article, and decorative sheet**
Formverfahren, geformtes Druckmaterial, Verfahren zur Herstellung eines In-Mold-Formartikels, In-Mold-Formartikel und dekorative Folie
Processus de moulage, matériau imprimé moulé, procédé de production d'un article moulé, article moulé dans un moule et feuille décorative

(30) Priority: 30.09.2013 JP 2013204197
(43) Date of publication of application: 01.04.2015
(73) Proprietor: FUJIFILM Corporation, Tokyo 106-8620 (JP)
(72) Inventor: Araki, Kenjiro, Ashigarakami-gun, Kanagawa (JP)
(74) Representative: Klunker IP Patentanwälte PartG mbB

(56) References cited:
- WO-A1-2013/139636
- US-A1- 2009 047 477
- US-A1- 2010 003 523
- US-A1- 2013 011 624
- US-A1- 2013 127 960

## Description

The present invention relates to a molding process, a molded printed material, a process for producing an in-mold molded article, and an in-mold molded article.

As image recording methods for forming an image on a recording medium such as paper or plastic based on an image data signal, there are an electrophotographic method, sublimation type and melt type thermal transfer methods, a screen printing method, an inkjet method, etc.

Furthermore, molded printed sheets (decorative sheets) have recently been used in various applications. For example, the surface sheet of a membrane switch used in an electrical product, etc. is produced by forming an image on a plastic sheet and then embossing it in order to impart a click feel to a switch portion (click portion). Furthermore, there are many cases in which, in order to give a printed material a matte appearance or a three-dimensional feel in design, the printed material is subjected to embossing.

Moreover, drink product vending machines for drinking water, tea, juice, etc. are widespread, and these vending machines display dummy display items of products for sale. As such dummy display items, a flat support that is formed by subjecting a transparent thermoplastic resin sheet to decorative printing is deep drawn to give a halved shape of an actual-size drink product container, thus forming a deep-drawn molding with a rise of 25 mm or higher in some cases, and the back face is illuminated so as to give a strong appeal to the product image.

As conventional molding processes, methods described in Patent Documents 1 to 3 are known.

Patent Document 1 discloses a process for producing a vacuum forming molding having a textured pattern, the process comprising a step (1) in which, in a state in which a heat-shrinkable resin sheet is held, it is irradiated with infrared so that a section A and a section B adjacent to each other within the same plane of the resin sheet have different surface temperatures and the surface temperature of at least section A is the orientation return strength inflection-point temperature T of the resin sheet or greater to thus generate a difference in film thickness between section A and section B, and a step (2) in which the resin sheet is pressed against a mold by a vacuum forming method.

Furthermore, Patent Document 2 describes a decorative resin molded article comprising a resin sheet comprising a design on one face in which, due to projections being formed on said one face from an ink comprising a UV-curable resin and a coloring material, a colored pattern and a textured pattern are synchronized, and a resin-injection molded body laminated and integrated with the other face of the resin sheet by injection molding of a synthetic resin.

Patent Document 3 discloses an embossed decorative injection-molded article comprising a surface layer formed from an acrylic resin film, a print layer laid on the inner side of the surface layer, an adhesive layer laid on the inner side of the print layer, and an injected resin layer, the injection-molded article comprising a textured pattern due to embossing on the surface of the surface layer of a front part and a side part thereof.

US 2010/003523A1 discloses a method of molding an article, comprising subjecting a coated thermoplastic film to printing to obtain a decorative film, placing the film into a mold, and injecting a resin into the mold cavity space behind the film, wherein the film and the injection molded resin form a single molded part.
Patent Document 1: JP-A-2012-56170 (JP-A denotes a Japanese unexamined patent application publication)
Patent Document 2: JP-A-2012-153107
Patent Document 3: JP-A-2008-105415

It is an object of the present invention to provide a molding process that can produce a molded printed material with a textured feel simply and inexpensively, a molded printed material, a process for producing an in-mold molded article, and an in-mold molded article.

Furthermore, it is another object of the present invention to provide a decorative sheet that can produce a molded printed material with a textured feel simply and inexpensively.

The objects have been attained by means described in <1> or <16> to <18> below. They are shown below together with <2> to <15>, which are preferred embodiments.
<1> A molding process comprising, in order, a preparation step of preparing a sheet having a textured pattern due to projections formed by curing an ink composition above one face of a substrate, a placement step of placing the face of the sheet having the textured pattern so that it faces a mold, and a molding step of carrying out molding with the sheet and the mold in contact with each other, wherein the sheet is a sheet having an image layer formed by curing a colored ink composition above one face of a substrate and having a textured pattern due to projections formed by curing a clear ink composition above the substrate and/or the image layer,
<2> the molding process according to <1>, wherein the projections are non-continuous projections above said one face of the substrate,
<3> the molding process according to <1> or <2>, wherein the substrate is transparent,
<4> the molding process according to any one of <1> to <3>, wherein at least some of the projections have a height of at least 30 µm,
<5> the molding process according to any one of <1> to <4>, wherein the sheet comprises, above said one face of the substrate, at least a region where projections having a height of at least 30 µm are formed and a region where projections having a height of less than 30 µm are formed,
<6> the molding process according to any one of <1> to <5>, wherein the average distance between the projections is 5 to 500 µm.
<7> the molding process according to any one of <1> to <6>, wherein the image layer is a layer formed by curing colored ink compositions of n colors, and when the mass per unit area of the projections formed by curing a clear ink composition is X (g), and the mass of the image layer per unit area is Y (g), the conditions below are satisfied
   when n = 1, 40/100 < X/Y ≤ 100/100
   when n = 2, 30/100 < X/Y ≤ 100/100
   when n = 3, 25/100 < X/Y ≤ 100/100
   when n = 4, 20/100 < X/Y ≤ 100/100
   when n ≥ 5, 15/100 < X/Y ≤ 100/100,
<8> the molding process according to any one of <1> to <6>, wherein the sheet is a sheet having above one face of a substrate at least a region where projections having a height of at least 30 µm are formed and a region where projections having a height of less than 30 µm are formed in a scattered manner, the image layer is a layer formed by curing colored ink compositions of n colors, and when the mass per unit area of the projections formed by curing the clear ink composition in the region above the sheet where projections having a height of less than 30 µm are formed in a scattered manner is X' (g), and the mass of the image layer per unit area is Y (g), the conditions below are satisfied
   when n = 1, 1/10,000 ≤ X'/Y ≤ 40/100
   when n = 2, 1/10,000 ≤ X'/Y ≤ 30/100
   when n = 3, 1/10,000 ≤ X'/Y ≤ 25/100
   when n = 4, 1/10,000 ≤ X'/Y ≤ 20/100
   when n ≥ 5, 1/10,000 ≤ X'/Y ≤ 15/100,
<9> the molding process according to any one of <1> to <8>, wherein the content of a monofunctional polymerizable compound in the colored ink composition is at least 50 mass% of the total mass of polymerizable compound,
<10> the molding process according to any one of <1> to <9>, wherein the colored ink composition comprises an *N*-vinyllactam as the polymerizable compound,
<11> the molding process according to any one of <1> to <10>, wherein the colored ink composition comprises at least one monofunctional polymerizable compound selected from the group consisting of (a-1) to (a-8) below as the polymerizable compound 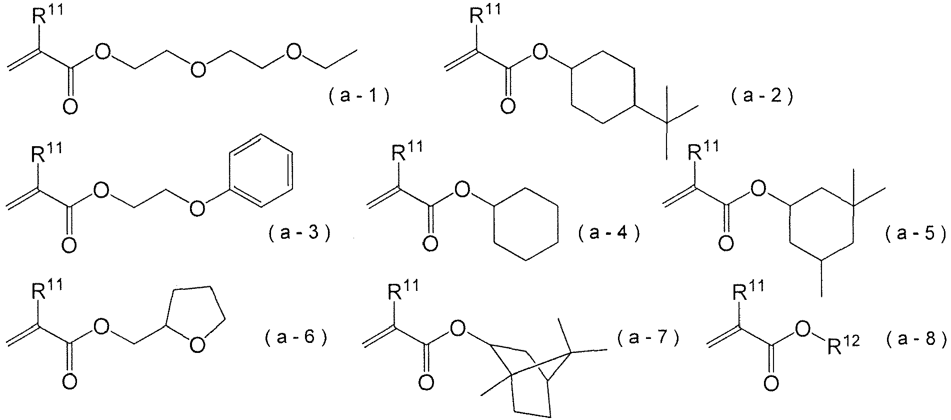 wherein in the Formulae, R₁₁ denotes a hydrogen atom or a methyl group, and R¹² denotes an alkyl group having 4 to 12 carbons,
<12> the molding process according to any one of <1> to <11>, wherein the colored ink composition and/or the clear ink composition comprise a silicone-based acrylate oligomer as the polymerizable compound,
<13> the molding process according to any one of <1> to <12>, wherein the projections are projections formed by curing the radiation-curable ink composition by exposure using a light-emitting diode,
<14> the molding process according to any one of <1> to <13>, wherein the molding is vacuum forming, pressure forming, or vacuum/pressure forming,
<15> the molding process according to any one of <1> to <14>, wherein it further comprises a trimming step of carrying out hole making by trimming after the molding step,
<16> a molded printed material obtained by the molding process according to any one of <1> to <15>,
<17> a process for producing an in-mold molded article, comprising a step of placing the molded printed material according to <16> on an inner wall of a cavity formed by a plurality of molds, and a step of injecting a molten resin into the cavity via a gate, and
<18> an in-mold molded article obtained by the production process according to <16>.

In accordance with the present invention, there can be provided a molding process that can produce a molded printed material with a textured feel simply and inexpensively, a decorative sheet molded product, a process for producing an in-mold molded article, and an in-mold molded article.

Furthermore, in accordance with the present invention, there can be provided a decorative sheet that can produce a molded printed material with a textured feel simply and inexpensively.

### Brief Description of Drawings

FIG. 1: A cross-sectional schematic drawing showing one example of a sheet having a textured pattern due to projections suitably used in the present invention.
FIG. 2: A cross-sectional schematic drawing showing one example of the molding process of the present invention.
FIG. 3: An external perspective view showing one example of inkjet recording equipment suitably used in the present invention.
FIG. 4: A transparent plan view schematically showing one example of a paper transport path of the inkjet recording equipment shown in FIG. 3.
FIG. 5: A transparent plan view showing one example of the constitution of an inkjet head and a UV irradiation section shown in FIG. 3. Explanation of Reference Numerals and Symbols

10: inkjet recording equipment, 12: recording medium, 20: main body, 22: support legs, 24: inkjet head, 26: platen, 28: guide mechanism, 30: carriage, 32A, 32B: provisional curing light source, 34A, 34B: main curing light source, 35: movement mechanism (light source movement part), 36: ink cartridge, 38: mounting section, 40: nip roller, 42: supply-side roll, 44: wind-up roll, 46: guide, 50: temperature control section, 52: pre-temperature control section, 54: post-temperature control section, 61, 61C, 61M, 61Y, 61K, 61LC, 61LM, 61CL, 61W: nozzle array, 100: sheet, 102: substrate, 104: image layer, 106: projection, 106a: projection having height of at least 30 µm, 106b: projection having height of less than 30 µm, 110: mold, 112: molding machine lower part, 114: molding machine upper part, 116: clamp, 118: molded printed material.

In the present invention, the notation 'X to Y' expressing a numerical range has the same meaning as that of 'at least X but no greater than Y' (X < Y) or 'no greater than X but at least Y' (X > Y). In addition, 'mass%' has the same meaning as that of 'wt%', and 'parts by mass' has the same meaning as that of 'parts by weight'. Furthermore, '(Component A) a monofunctional polymerizable compound', etc. is also simply called 'Component A', etc.

In the explanation below, a combination of preferred embodiments is a more preferred embodiment.

The present invention is explained in detail below.

### (Molding process and molded printed material)

The molding process of the present invention comprises, in order, a preparation step of preparing a sheet having a textured pattern due to projections formed by curing an ink composition above one face of a substrate, a placement step of placing the face of the sheet having a textured pattern so that it faces a mold, and a molding step of carrying out molding with the sheet and the mold in contact with each other.

Furthermore, the molded printed material of the present invention is a molded printed material produced by the molding process of the present invention.

The ink composition is a clear ink composition. Furthermore, the ink composition is preferably an inkjet ink composition.

The projections are preferably non-continuous projections above said one face of the substrate.

Furthermore, at least some of the projections preferably have a height of at least 30 µm.

When the ink composition and the projections are in the above modes, the effects of the present invention can be exhibited.

Conventionally, in order to impart asperities to a molded article, it is necessary to make a mold from scratch, which incurs a high cost and takes a long time.

Furthermore, accompanying the spread of inkjet, an image having a textured feel has been formed by carrying out UV inkjet printing directly on a molded product, but there are the defects that the film strength is low and there is deterioration such as peeling off over time.

Since the molding process of the present invention forms a textured pattern due to projections formed by curing an ink composition above a substrate, and it is subsequently molded, it is easy to make asperities due to bulging of only the positions corresponding to projections and, furthermore, since the substrate serves as the outermost surface, it becomes unnecessary to be concerned about strength or deterioration.

This enables a molded article having a textured feel to be easily produced from image data alone without requiring a mold to be made from scratch or without needing to take ink film strength or deterioration over time into consideration.

Specifically, for example, in accordance with the molding process of the present invention, even if molding is carried out using a mold that has not been subjected to satin finishing, a molded printed material (decorative sheet molded product) with a surface having a textured feel that has the roughness of a satin finish can be obtained inexpensively and easily.

### <Preparation step>

The molding process of the present invention comprises a preparation step of preparing a sheet having a textured pattern due to projections formed by curing an ink composition above one face of a substrate.

The sheet has a textured pattern due to projections formed by curing an ink composition above said one face of the substrate. In the present invention, the sheet is also called a 'decorative sheet'.

Furthermore, the sheet has at least a textured pattern due to projections above said one face of the substrate, but may have a textured pattern due to projections on the other face of the substrate. From the viewpoint of stretchability or durability of a molded printed material over time, it is preferable for it not to have a textured pattern due to projections on said other face of the substrate.

The sheet may have a textured pattern in at least a section where a textured feel is required in a molded printed material that is to be obtained. That is, the sheet may have a textured pattern due to projections only in part or over the entire area of said one face.

In the present invention, the substrate is not particularly limited, and a substrate known as a support or a recording material may be used. For example, paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, etc.), and paper or plastic film laminated or vapor-deposited with the metal can be cited.

As the substrate in the present invention, a non-absorbing substrate may be suitably used. Furthermore, a transparent recording medium is suitable.

As such a substrate, a plastic film can be cited preferably, and polycarbonate can be cited particularly preferably.

Furthermore, the substrate is preferably transparent from the viewpoint of clarity when an image is formed.

The height of at least some of the projections is preferably at least 30 µm, more preferably 30 to 200 µm, yet more preferably 30 to 100 µm, and particularly preferably 30 to 80 µm. When in this range, a sufficiently textured feel can be imparted to a molded printed material that is obtained.

The projections are preferably non-continuous projections above said one face of the substrate. When in this mode, stretchability is excellent, and a molded printed material having a sufficiently textured feel can be obtained.

The shape of the projections is not particularly limited, and may be of various shapes such as for example an angular columnar shape, a columnar shape, or a hemispherical shape. Moreover, the shapes of the projections may be selected as appropriate according to a desired textured feel.

The average distance between the projections is preferably 5 to 500 µm, more preferably 10 to 200 µm, and yet more preferably 20 to 100 µm. When in this range, a sufficiently textured feel can be imparted to a molded printed material that is obtained.

The configuration of the projections forming a textured pattern is not particularly limited, and they may be arranged regularly or randomly, all the projections may have the same shape, or the projections may have various shapes.

The projections are formed from a clear ink composition.

Furthermore, the projections are preferably formed from an inkjet ink composition.

Moreover, the projections are preferably formed from a radiation-curable ink composition.

The ink composition for forming the projections is explained later.

Furthermore, the projections may be formed above one face of the substrate, for example, the projections may be in contact with the substrate, or an image layer, etc. which is described later, may be formed between the substrate and the projections.

The sheet preferably has above one face of the substrate a region where projections having a height of at least 30 µm are formed and a region where projections having a height of less than 30 µm are formed (hereinafter, also called a 'sticking-prevention region'). In this mode, resistance to sticking to a mold during molding is excellent.

These two regions may each be formed above part of one face of the substrate, or the two regions may occupy the entire face.

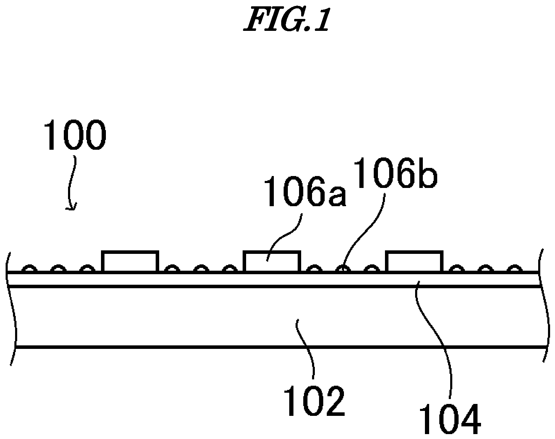

The projections in the sticking-prevention region are preferably non-continuous projections, and more preferably non-continuous projections that are present on the substrate surface in a scattered manner. Examples include non-continuous projections shown in FIG. 1, which is described below.

FIG. 1 is a cross-sectional schematic drawing showing one example of a sheet having a textured pattern due to projections suitably used in the present invention.

With regard to a sheet 100 shown in FIG. 1, an image layer 104 is formed above a substrate 102, and projections 106a having a height of at least 30 µm and projections 106b having a height of less than 30 µm are formed above the image layer 104.

The shape of the projections 106a is a rectangular parallelepiped, and they form a textured pattern on the sheet. Furthermore, the shape of the projections 106b is hemispherical, and they are formed in a sticking-prevention region above the sheet.

The area of the sticking-prevention region where the projections are formed is preferably 0.1 to 80 area%, more preferably 1 to 78 area%, yet more preferably 5 to 76 area%, and particularly preferably 10 to 75 area%. When in this range, they become non-continuous projections, and sticking to a mold can be further suppressed.

The area of projections of this region may be measured as follows.

Specifically, a photomicrograph is taken using a profile measurement laser microscope (VK9700, Keyence Corporation), the sticking-prevention region and projections in this region are identified by carrying out an examination in bird's eye view, and the areas are analyzed. More specifically, an image is measured at a magnification of 200 times, a region of 1,350 µm × 1,012 µm is freely selected from the measured image, this region is defined as the entire image, the area of projections that can be confirmed from the entire image is identified, the area occupied by the projections is analyzed, and calculation of (area of projections /area of entire image × 100) is carried out. In addition, 10 positions are freely chosen from the image, the ratio by area of the projections is calculated as above for each position, and the average value thereof is determined.

The height of the projections in the sticking-prevention region is preferably at least 1 µm but less than 30 µm, more preferably 3 to 28 µm, and yet more preferably 5 to 25 µm. When in this range, sticking to a mold is suppressed, and transfer of the projections in the sticking-prevention region to the substrate is suppressed.

The height of the projections in the present invention is calculated by analysis in the height direction using the above violet laser microscope, specifically using a profile measurement laser microscope (VK9700, Keyence Corporation), and an image is measured at a magnification of 200 times. In the case of the projections in the sticking-prevention region, 10 projections present in an image of 1,350 µm × 1,012 µm are selected, and calculation is carried out to give the number average.

The sheet is a sheet comprising an image layer formed by curing a colored ink composition above one face of a substrate and a textured pattern due to projections formed by curing a clear ink composition above the substrate and/or the image layer. When in this mode, a molded printed material having a desired image can be obtained.

The colored ink composition in the present invention is an ink composition comprising a colorant.

On the other hand, the clear ink composition is substantially free of a colorant but a colorant might be used for the purpose of improving a yellowish color of a clear ink composition. In such a case also, the content of the colorant in the clear ink composition is no greater than 1 mass%. Furthermore, the clear ink composition preferably does not contain a colorant.

Moreover, the colored ink composition preferably comprises an inkjet ink composition.

Furthermore, the colored ink composition preferably comprises a radiation-curable ink composition.

The image layer may be formed so as to be a desired image and may be formed from one type of colored ink composition or two or more types of colored ink compositions. For example, an ink set comprising four colors, that is, cyan, magenta, yellow, and black colored ink compositions or an ink set comprising five colors, that is, cyan, magenta, yellow, black, and white colored ink compositions can be cited as preferred examples.

Furthermore, the preparation step in the molding process of the present invention may comprise, in order, an image layer formation step of forming an image layer by discharging at least one colored ink composition above a substrate, and a projection formation step of forming projections by discharging a clear ink composition above the substrate and/or the image layer.

With regard to the sheet, the image layer is a layer in which colored ink compositions of n colors are cured, and when the mass per unit area of the projections formed by curing a clear ink composition is X (g), and the mass of the image layer per unit area is Y (g), the conditions below are preferably satisfied.
When n = 1, 40/100 < X/Y ≤ 100/100,
when n = 2, 30/100 < X/Y ≤ 100/100,
when n = 3, 25/100 < X/Y ≤ 100/100,
when n = 4, 20/100 < X/Y ≤ 100/100, and
when n ≥ 5, 15/100 < X/Y ≤ 100/100.

When the ratio by mass of the image layer and the projections is within these ranges, an image having a better textured feel can be obtained.

When a clear image is formed in a halftone dot manner, if the X/Y value and height conditions are values given in Table 1, an image having a textured feel as shown in Table 1 can easily be produced.

A relationship diagram when a textured pattern is formed using a clear ink composition (CI) above an image layer printed using colored ink compositions of 5 colors (white (W), yellow (Y), magenta (M), cyan (C), and black (K) (Y + M + C + K + W)) is shown. Furthermore, when an image is formed using 1 to 4 colors, the same trend is shown.

**(Table 1)**

| | | Maximum height of projections | | | |
|---|---|---|---|---|---|
| | | Less than 30µm | At least 30µm but less than 45µm | At least 45µm but less than 60µm | 60µm or greater |
| X/Y value (CI/(Y + M + C + K + W)) | Less than 15/100 | Lacks textu red feel | Projecting pattern possible | Projecting pattern possible | Projecting pattern possible |
| | At least 15/100 but less than 30/100 | Lacks textu red feel | Embossed | Embossed | Embossed |
| | At least 30/100 but less than 50/100 | Lacks textu red feel | Embossed | Glossy asperities | Glossy asperities |
| | At least 50/100 but less than 70/100 | Not possible | Glossy asperities | Glossy asperities | Glossy asperities |
| | 70/100 or greater | Not possible | Glossy asperities | Glossy asperities | Glossy asperities |

As shown in Table 1, when the maximum height of the projections is less than 30 µm, an image having a textured feel cannot be obtained in a molded printed material that is obtained. Furthermore, 'not possible' in Table 1 means that the total amount of colored ink composition is too small and even a sufficient color image cannot be formed.

When the maximum height of the projections is at least 30 µm and the X/Y value is less than 15/100, a molded printed material on which a projecting pattern having a textured feel according to the height that the projections are formed can easily be obtained.

Furthermore, 'embossed' in Table 1 means that a molded printed material with a textured feel as if embossing had been carried out can easily be obtained without carrying out embossing.

Moreover, 'glossy asperities' in Table 1 means that a molded printed material having not only a textured feel but also gloss can easily be obtained.

In the case in which the sheet is a sheet having on one face of a substrate at least a region where projections having a height of at least 30 µm are formed and a region where projections having a height of less than 30 µm are formed in a scattered manner, when the image layer is a layer formed by curing colored ink compositions of n colors, the mass per unit area of the projections formed by curing a clear ink composition in the region on the sheet where projections having a height of less than 30 µm are formed in a scattered manner is X' (g), and the mass of the image layer per unit area is Y (g), it is preferable that the conditions below are satisfied.
When n = 1, 1/10,000 ≤ X'/Y ≤ 40/100
When n = 2, 1/10,000 ≤ X'/Y ≤ 30/100
When n = 3, 1/10,000 ≤ X'/Y ≤ 25/100
When n = 4, 1/10,000 ≤ X'/Y ≤ 20/100
When n ≥ 5, 1/10,000 ≤ X'/Y ≤ 15/100

When these conditions are satisfied, sticking to a mold can be suppressed, and an image having excellent stretchability can be obtained.

The amount of fired droplets per unit area of the clear ink composition forming projections in the sticking-prevention region is preferably 0.001 to 10 g/m², more preferably 0.01 to 9 g/m², and particularly preferably 0.5 to 8 g/m².

When a colored ink composition of only one color is used, the total amount of fired droplets per unit area of the colored ink composition is preferably 0.001 to 10 g/m², more preferably 0.01 to 9 g/m², and particularly preferably 0.5 to 8 g/m².

When as the colored ink compositions two or more colors are used, the total amount of fired droplets per unit area of the colored ink compositions is preferably 0.001 to 10 g/m², more preferably 0.01 to 9 g/m², and particularly preferably 0.5 to 8 g/m².

### <Placement step and molding step>

The molding process of the present invention comprises a placement step of placing the face of the sheet having a textured pattern so that it faces a mold, and a molding step of carrying out molding with the sheet and the mold in contact with each other.

Due to carrying out molding while making the face of the sheet having a textured pattern face the mold, it is possible to obtain a molded printed material with a textured feel without needing to be concerned about strength or deterioration of asperities of the molded printed material formed so as to correspond to the textured pattern. Furthermore, prevention of sticking to the mold and the blocking resistance of the molded printed material at room temperature (25°C) are excellent.

Furthermore, the mold is preferably a mold having a surface that has not been subjected to machining, for example, satin finishing, in order to form a textured feel on a molded printed material. The molding process of the present invention can give a molded printed material having a textured feel such as a rough surface like a satin finish without forming a textured feel on the mold surface. The mold is of course a mold that forms the shape of the molded printed material, but it does not require surface machining in order to form a textured feel on the molded printed material, and needless to say the mold is formed to have a desired shape.

Molding in the molding step is preferably molding while putting only one face of the sheet in contact with the mold, and vacuum forming, pressure forming, or vacuum/pressure forming is more preferable. In addition, it is preferable to carry out molding without particularly putting most of the other face of the sheet in contact with a solid, but part of said other face of the sheet may be in contact with a molding device, a mold, etc. in order to carry out fixing or to make the system air tight.

Vacuum forming is a method in which a support having an image formed thereon is preheated to a temperature at which it can be thermally deformed, and molding is carried out by pressing it against a mold and cooling while sucking it toward the mold by means of a vacuum and stretching it. It is preferable to use a convex mold and a concave mold in combination in vacuum forming.

Pressure forming is a method in which a support having an image formed thereon is preheated to a temperature at which it can be thermally deformed, and molding is carried out by pressing it against a mold by applying pressure from the side opposite to the mold and cooling.

Vacuum/pressure forming is a method in which molding is carried out by applying a vacuum and pressure at the same time.

Details may be referred to in the 'Thermal Forming' section on p. 766 to 768 of 'Koubunshi Daijiten' (Polymer Dictionary) (Maruzen Co., Ltd.) and literature referred to in this section.

The forming temperature may be determined as appropriate according to the type of support and the support, but it is preferable to carry out forming at a support temperature of 60°C to 180°C, more preferably 80°C to 160°C, and yet more preferably 80°C to 150°C. When in this range, forming is carried out with little change in image color and excellent mold release.

Furthermore, the mold temperature is preferably 80°C to 120°C.

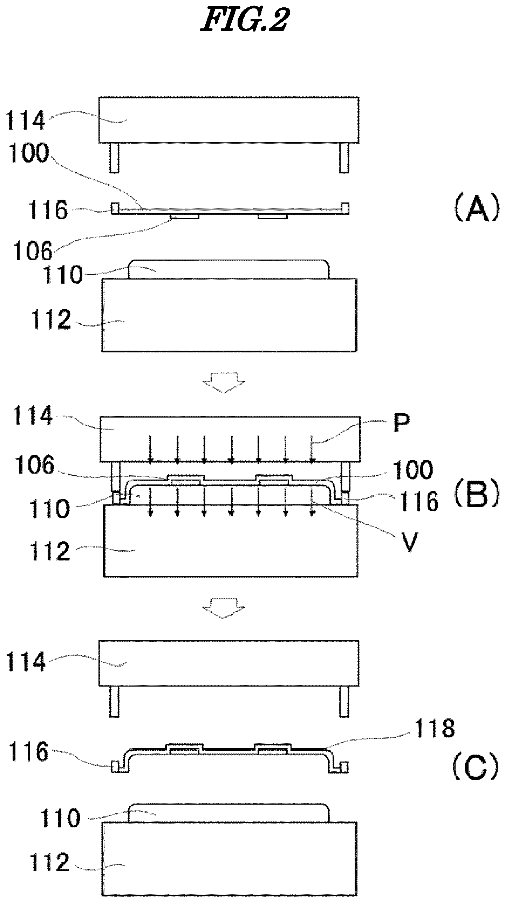

FIG. 2 is a schematic drawing of the cross-section showing one example of the molding process of the present invention; in particular, FIG. 2 (A) shows the placement step, FIG. 2 (B) shows the molding step, and FIG. 2 (C) shows a molded printed material that is obtained.

As shown in FIG. 2 (A), the sheet 100 is placed so that a face having a textured pattern formed by the projections 106 faces a mold 110. It is preferable that the sheet 100 is heated by means of a heater, etc. in advance. The mold 110 is placed on a molding machine lower part 112, which forms, together with a molding machine upper part 114, a sealed space for carrying out molding. Furthermore, for ease of handling of the sheet 100 a clamp 116 is provided on an end part of the sheet 100.

The sheet 100 placed within the molding machine as shown in FIG. 2 (A) is subjected to molding as shown in FIG. 2 (B). The sealed space is formed by the molding machine lower part 112 and the molding machine upper part 114, a reduced pressure V is applied from the molding machine lower part 112 side to thus carry out vacuum forming and an increased pressure P is applied from the molding machine upper part 114 side to thus carry out pressure forming (vacuum/pressure forming), thereby carrying out molding of the sheet 100. In this arrangement, in a section of the sheet 100 where the projections 106 are formed, the substrate 102 (not illustrated) and the image area 104 (not illustrated) are molded so as to protrude due to the projections 106, thus forming asperities.

After molding, as shown in FIG. 2 (C), the molding machine lower part 112 and the molding machine upper part 114 are opened, and a molded printed material 118 is taken out.

### <Trimming step>

The molding process of the present invention preferably further comprises a trimming step of carrying out hole making by trimming, and more preferably further comprises a trimming step of carrying out hole making by trimming after the molding step.

'Trimming' means removing an unwanted part of the decorative sheet or the decorative sheet molded product after molding, and 'hole making by trimming' means removing unwanted parts by hole making. In addition, the above hole making is preferably carried by punching from the viewpoint of productivity.

Hole making may be carried out for the sheet before molding or may be carried out for the sheet after molding (molded printed material), and is not particularly limited. Furthermore, hole making may be carried out after in-mold molding, which is described later. Among them, it is preferable to carry out hole making after molding.

### <Other steps>

The molding process of the present invention may comprise a known step other than the above steps.

Examples thereof include a step of taking out the molded printed material obtained from the mold and a step of removing an unwanted part of the molded printed material.

### <Ink composition>

The colored ink composition and the clear ink composition used in the molding process of the present invention are now explained. In the explanation below, when simply referring to an 'ink composition', it collectively means a colored ink composition and a clear ink composition.

It is preferable that the molding process of the present invention forms an image layer using a colored ink composition and forms projections using a clear ink composition.

In the present invention, both the colored ink composition and the clear ink composition are preferably radiation-curable ink compositions, and preferably oil-based ink compositions that can be cured by irradiation with actinic radiation. 'Actinic radiation' is radiation that can impart energy to generate an initiating species in the ink composition by irradiation therewith, and includes α-rays, γ-rays, X-rays, UV, visible light, and an electron beam. Among them, from the viewpoint of curing sensitivity and ready availability of equipment, UV and an electron beam are preferable, and UV is particularly preferable.

Furthermore, the ink composition does not comprise a highly volatile solvent, and is preferably free from solvent. This is because if a highly volatile solvent remains in a cured ink image, problems such as degradation of solvent resistance and VOC (Volatile Organic Compound) due to residual solvent occur. The content of solvent, including water, is preferably no greater than 5 mass%, more preferably no greater than 3 mass%, yet more preferably no greater than 1 mass%, and particularly preferably substantially none. However, this does not exclude the ink composition containing a slight amount of moisture, etc. by absorbing humidity in the air in a usual application configuration.

Moreover, in the present invention, the colored ink composition and the clear ink composition are both preferably inkjet ink compositions.

A polymerizable compound, which is a characteristic component of the colored ink composition and the clear ink composition, is explained below for each ink composition, and other components are then explained.

### 1. Colored ink composition

The colored ink composition used in the present invention comprises a polymerizable compound, and preferably comprises a monofunctional polymerizable compound as the polymerizable compound.

Furthermore, the content of the monofunctional polymerizable compound in the colored ink composition is preferably at least 50 mass% relative to a total mass of 100 mass% of the polymerizable compound contained in the composition, more preferably at least 80 mass%, yet more preferably at least 90 mass%, and particularly preferably at least 95 mass%.

Furthermore, the content of the polyfunctional polymerizable compound in the colored ink composition is preferably no greater than 50 mass% relative to a total mass of 100 mass% of the polymerizable compound contained in the composition, more preferably no greater than 20 mass%, yet more preferably no greater than 10 mass%, and particularly preferably no greater than 5 mass%.

When the contents of the monofunctional polymerizable compound and the polyfunctional polymerizable compound are within the above ranges, an image layer having excellent adhesion to a substrate and excellent stretchability is obtained.

In addition, the colored ink composition preferably comprises the polymerizable compound at 50 to 98 mass% of the entire ink composition, more preferably 55 to 96 mass%, and yet more preferably 60 to 95 mass%. When the content of the polymerizable compound is within the above range, curability is excellent, and an image layer having excellent substrate adhesion and stretchability is obtained.

The polymerizable compound is not particularly limited as long as it is a compound comprising at least one polymerizable group, and includes any configuration of monomer, oligomer, or polymer.

The polymerizable group may be any one of a cationically polymerizable group and a radically polymerizable group; examples of the cationically polymerizable group include an epoxy group, an oxetanyl group, and a vinyl ether group, and examples of the radically polymerizable group include an ethylenically unsaturated group (ethylenically unsaturated bond).

The polymerizable group is preferably an ethylenically unsaturated group.

In the present invention, the colored ink composition and the clear ink composition preferably comprise an ethylenically unsaturated compound as the polymerizable compound, and more preferably a radically polymerizable compound.

In the present invention, a 'monomer' means a compound having a molecular weight (the weight-average molecular weight when there is a molecular weight distribution) of no greater than 1,000. The molecular weight (the weight-average molecular weight when there is molecular weight distribution) is preferably 50 to 1,000.

Furthermore, an 'oligomer' is generally a polymer having a finite number (5 to 100 in general) of monomer-based constituent units, and the weight-average molecular weight of the oligomer is greater than 1,000 but less than 20,000.

Moreover, a 'polymer' is a compound having a weight-average molecular weight that is greater than that of the oligomer region, and the weight-average molecular weight is at least 20,000.

Weight-average molecular weight is measured by a GPC method (gel permeation chromatograph method) and converted using reference polystyrene. For example, an HLC-8220 GPC (Tosoh Corporation) is used as the GPC, with three columns, that is, TSKgeL SuperHZM-H, TSKgeL SuperHZ4000, and TSKgeL SuperHZ2000 (Tosoh Corporation, 4.6 mm ID × 15 cm) as columns, and THF (tetrahydrofuran) as eluent. The conditions are such that the sample concentration is 0.35 mass%, the flow rate is 0.35 mL/min, the amount of sample injected is 10 µL, the measurement temperature is 40°C, and an IR detector is used. Furthermore, a calibration curve is generated from eight samples of 'reference sample TSK standard, polystyrene', that is, 'F-40', 'F-20', 'F-4', 'F-1', 'A-5000', 'A-2500', 'A-1000', and '*n*-propylbenzene' manufactured by Tosoh Corporation.

In the present invention, the colored ink composition preferably comprises a monofunctional polymerizable monomer as the monofunctional polymerizable compound. It is preferable that at least 50 mass% of the monofunctional polymerizable compound is a monofunctional polymerizable monomer, it is more preferable that at least 70 mass% is a monofunctional polymerizable monomer, it is yet more preferable that at least 90 mass% is a monofunctional polymerizable monomer, and it is yet more preferable that the entire amount (100 mass%) of the monofunctional polymerizable compound is a monofunctional polymerizable monomer.

Furthermore, the colored ink composition preferably comprises a polyfunctional polymerizable oligomer as the polyfunctional polymerizable compound. It is preferable that at least 50 mass% of the polyfunctional polymerizable compound is a polyfunctional polymerizable oligomer, it is more preferable that at least 70 mass% is a polyfunctional polymerizable oligomer, and it is yet more preferable that the entire amount (100 mass%) of the polyfunctional polymerizable compound is a polyfunctional polymerizable oligomer.

In addition, when a plurality of colored ink compositions are used as the colored ink compositions, it is preferable that all of the ink compositions of all the colors satisfy the above conditions.

### (Component A) Monofunctional polymerizable compound

In the present invention, the colored ink composition preferably comprises (Component A-1) an *N*-vinyl compound as the monofunctional polymerizable compound.

### (Component A-1) N-vinyl compound

In the present invention, the colored ink composition preferably comprises (Component A-1) an *N*-vinyl compound as the polymerizable compound. However, the clear ink composition comprising an *N*-vinyl compound is not excluded.

The *N*-vinyl compound is preferably an *N*-vinyllactam, more preferably *N*-vinylcaprolactam or 1-vinyl-2-pyrrolidone, and particularly preferably N-vinylcaprolactam. *N*-vinylcaprolactam is preferable since it has excellent safety, is widely used and available at relatively low cost, and can give particularly good ink curability and adhesion of a cured film to a recording medium.

The content of Component A-1 in the colored ink composition is preferably 5 to 60 mass% relative to the mass of the entire colored ink composition, more preferably 15 to 35 mass%, and particularly preferably 20 to 30 mass%. When the content is at least 5 mass%, adhesion to a recording medium is excellent, and when the content is no greater than 60 mass%, storage stability is excellent.

### (Component A-2) Monofunctional (meth)acrylate

In the present invention, the colored ink composition preferably comprises (Component A-2) a monofunctional (meth)acrylate as the polymerizable compound. (Meth)acrylate means acrylate and methacrylate collectively. It is preferable for the colored ink composition to comprise Component A-2 since a colored ink composition having excellent curability and excellent adhesion to a substrate and stretchability can be obtained.

In the present invention, the colored ink composition preferably comprises at least one monofunctional polymerizable monomer selected from the group consisting of (a-1) to (a-8) below as Component A-2. 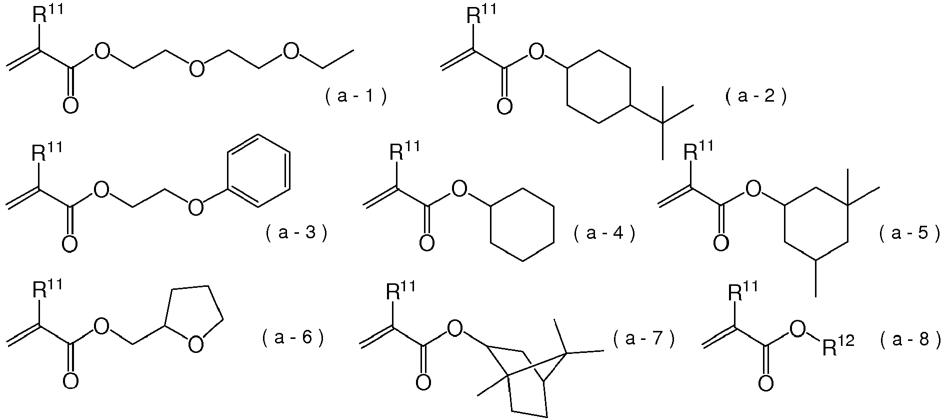 Wherein R¹¹ denotes a hydrogen atom or a methyl group, and R¹² denotes an alkyl group having 4 to 12 carbons.

The colored ink composition preferably comprises at least one monofunctional monomer selected from the group consisting of (a-1) to (a-8). R¹¹ is preferably a hydrogen atom.

The colored ink composition preferably comprises at least phenoxyethyl acrylate (a-3) and/or isobornyl acrylate (a-7), and more preferably comprises at least phenoxyethyl acrylate (a-3). Furthermore, it preferably comprises, in combination with phenoxyethyl acrylate (a-3), at least one monofunctional monomer selected from the group consisting of (a-1), (a-2), and (a-4) to (a-8), and particularly preferably comprises isobornyl acrylate (a-7) and phenoxyethyl acrylate (a-3). Due to the combined use of isobornyl acrylate (a-7) and phenoxyethyl acrylate (a-3), curability is excellent, and a cured image having excellent substrate adhesion and stretchability can be obtained.

The colored ink composition preferably comprises the monofunctional monomer selected from the group consisting of (a-1) to (a-8) in total at 10 to 85 mass% of the entire colored ink composition, more preferably 20 to 75 mass%, and yet more preferably 30 to 65 mass%. When in this range, the stretchability is excellent, and hole making suitability is excellent.

The colored ink composition may comprise a monofunctional (meth)acrylate other than Component A-2. Examples of the monofunctional (meth)acrylate other than Component A-2 include isoamyl (meth)acrylate, stearyl (meth)acrylate, lauryl (meth)acrylate, isomyristyl (meth)acrylate, isostearyl (meth)acrylate, 2-ethylhexyldiglycol (meth)acrylate, 2-hydroxybutyl (meth)acrylate, butoxyethyl (meth)acrylate, methoxydiethylene glycol (meth)acrylate, methoxypolyethylene glycol (meth)acrylate, methoxypropylene glycol (meth)acrylate, 2-hydroxyethyl (meth)acrylate, 2-hydroxypropyl (meth)acrylate, 2-(meth)acryloyxyethylsuccinic acid, 2-(meth)acryloyxyethyl-2-hydroxyethylphthalic acid, a lactone-modified flexible (meth)acrylate, cyclopentenyl (meth)acrylate, cyclopentenyloxyethyl (meth)acrylate, dicyclopentanyl (meth)acrylate, time cyclopentanyloxyethyl (meth)acrylate, benzyl (meth)acrylate, and cyclic trimethylolpropane formal (meth)acrylate.

### (Component B) Polyfunctional polymerizable compound

In the present invention, the colored ink composition may comprise (Component B) a polyfunctional polymerizable compound as the polymerizable compound; the polyfunctional polymerizable compound is preferably a polyfunctional radically polymerizable compound, and preferably comprises an ethylenically unsaturated group as a radically polymerizable group, and more preferably a (meth)acryloyl group.

That is, Component B is preferably a polyfunctional (meth)acrylate compound, and particularly preferably a polyfunctional (meth)acrylate oligomer.

The oligomer is preferably one comprising a (meth)acryloyl group as a functional group. The oligomer is particularly preferably one comprising an acryloyl group, that is, an acrylate oligomer.

The number of functional groups contained in the oligomer is preferably 2 to 15 per molecule from the viewpoint of achieving a balance between flexibility and curability, more preferably 2 to 6, yet more preferably 2 to 4, and particularly preferably 2.

Examples of the oligomer in the present invention include polyester (meth)acrylate-based, olefin-based (ethylene oligomer, propylene oligomer butene oligomer, etc.), vinyl-based (styrene oligomer, vinyl alcohol oligomer, vinylpyrrolidone oligomer, (meth)acrylate oligomer, etc.), diene-based (butadiene oligomer, chloroprene rubber, pentadiene oligomer, etc.), ring-opening polymerization (di-, tri-, tetra-ethylene glycol, polyethylene glycol, polyethylimine, etc.), polyaddition (oligoester (meth)acrylate, polyamide oligomer, polyisocyanate oligomer), addition-condensation oligomer (phenolic resin, amino resin, xylene resin, ketone resin, etc.), amine-modified polyester oligomer, and silicone-based (silicone (meth)acrylate oligomer). Among them, a silicone-based oligomer is preferable, and a silicone-based (meth)acrylate oligomer is particularly preferable.

With regard to the oligomers, one type may be used on its own or a plurality thereof may be used in combination.

Examples of the silicone-based oligomer include a silicone-containing compound (mainly a polydialkylsiloxane) comprising an acryloyl group, a methacryloyl group, or a vinyl group at a molecular terminal or in a side chain, and those having an acryloyl group or a methacryloyl group are preferable. When a silicone-based oligomer is used, an image that is excellent in terms of blocking resistance and stretchability of a cured film can be obtained.

Specific examples include compounds described in paragraphs 0012 to 0040 of JP-A-2009-185186.

In the present invention, the commercially available materials below may be used as the silicone-based oligomer.

EVERCRYL 350 and EVERCRYL 4842 (UCB Chemicals), PERENOL S-5 (Cognis), RC149, RC300, RC450, RC709, RC710, RC711, RC720, and RC802 (Goldschmidt Chemical Corporation), FM0711, FM0721, FM0725, and PS583 (Chisso Corporation), KP-600, X-22-164, X-22-164AS, X-22-164A, X-22-164B, X-22-164C, and X-22-164E (Shin-Etsu Chemical Co., Ltd.), BYK UV3500, BYK UV3570, and BYK Silclean3700 (BYK Chemie), TEGO Rad 2010, TEGO Rad 2100, TEGO Rad 2200N, TEGO Rad 2250N, TEGO Rad 2300, TEGO Rad 2500, TEGO Rad 2600, and TEGO Rad 2700 (Degussa), and DMS-V00, DMS-V03, DMS-V05, DMS-V21, DMS-V22, DMS-V25, DMS-V25R, DMS-V31, DMS-V33, DMS-V35, DMS-V41, DMS-V42, DMS-V46, DMS-V52, DMS-V25R, DMS-V35R, PDV-0325, PDV0331, PDV0341, PDV0346, PDV0525, PDV0541, PDV1625, PDV1625, PDV1631, PDV1635, PDV1641, PDV2331, PDV2335, PMV-9925, PVV-3522, FMV-4031, EDV-2025, VDT-123, VDT-127, VDT-131, VDT-153, VDT-431, VDT-731, VDT-954, VDS-2513, VDV-0131, VGM-021, VGP-061, VGF-991, VQM-135, VQM-146, VQX-221, VMS-005, VMS-T11, VTT-106, MTV-124, VAT-4326, VBT-1323, VPT-1323, VMM-010, VEE-005, and VPE-005 (Gelest).

Furthermore, other than the above silicone-based oligomers, another oligomer may be contained, and examples thereof include a polyethylene glycol di(meth)acrylate, a polyurethane oligomer, and a polyester oligomer whose molecular weights are within the oligomer region.

The polyurethane oligomer is preferably a polyurethane (meth)acrylate oligomer, and examples include an aliphatic polyurethane (meth)acrylate and an aromatic polyurethane (meth)acrylate. Details may be referred to in the Oligomer Handbook (Ed by Junji Furukawa, The Chemical Daily Co., Ltd.).

Examples of the polyurethane (meth)acrylate oligomer include U-2PPA, U-4HA, U-6HA, U-6LPA, U-15HA, U-324A, UA-122P, UA5201, and UA-512 manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, and CN9893 manufactured by Sartomer Japan Inc.; and EB204, EB230, EB244, EB245, EB270, EB284, EB285, EB810, EB4830, EB4835, EB4858, EB1290, EB210, EB215, EB4827, EB4830, EB4849, EB6700, EB204, EB8402, EB8804, and EB8800-20R manufactured by Daicel-Cytec Company Ltd.

The polyester oligomer is preferably an amine-modified polyester oligomer, and examples include EB524, EB80, and EB81 manufactured by Daicel-Cytec Company Ltd., CN550, CN501, and CN551 manufactured by Sartomer Japan Inc., and GENOMER 5275 manufactured by Rahn A.G.

From the viewpoint of achieving a balance between curability and adhesion, the content of the polyfunctional polymerizable compound is preferably 0.01 to 10 mass% relative to the total mass of the ink composition, more preferably 0.03 to 5 mass%, and yet more preferably 0.05 to 1 mass%.

In the present invention, the colored ink composition may comprise a polyfunctional polymerizable compound other than the above, and examples include a polyfunctional polymerizable monomer.

Due to the colored ink composition comprising a polyfunctional polymerizable monomer, high curability can be obtained. Specific examples of the polyfunctional polymerizable monomer include a polyfunctional polymerizable monomer used in the clear ink described later, and a polyfunctional (meth)acrylate monomer is particularly preferable.

### 2. Clear ink composition

The clear ink composition used in the present invention comprises a polymerizable compound, preferably comprises as the polymerizable compound a monofunctional polymerizable compound, and more preferably comprises a monofunctional polymerizable compound and a polyfunctional polymerizable compound as the polymerizable compound.

The content of the monofunctional polymerizable compound in the clear ink composition used in the present invention is preferably at least 50 mass% relative to a total mass of 100 mass% of the polymerizable compound contained in the composition, more preferably at least 60 mass%, yet more preferably at least 80 mass%, and particularly preferably at last 90 mass%.

Furthermore, the content of the polyfunctional polymerizable compound in the clear ink composition is preferably 1 to 50 mass% relative to a total mass of 100 mass% of the polymerizable compound contained in the composition, more preferably 2 to 20 mass%, and particularly preferably 5 to 10 mass%.

When the contents of the monofunctional polymerizable compound and the polyfunctional polymerizable compound are within the above ranges, a molded printed material having an excellent textured feel is obtained, and sticking to a mold during molding can be suppressed effectively.

As the clear ink composition, a plurality of clear ink compositions may be used, and it is preferable that all of the clear ink compositions satisfy the above conditions.

In addition, the clear ink composition preferably comprises the polymerizable compound at 50 to 98 mass% of the entire ink composition, more preferably 60 to 95 mass%, and yet more preferably 70 to 90 mass%. When in this range, curability is excellent, and substrate adhesion and stretchability are excellent.

In the present invention, the clear ink composition preferably comprises a polyfunctional polymerizable monomer as the polyfunctional polymerizable compound. It is preferable that at least 50 mass% of the polyfunctional polymerizable compound is a polyfunctional polymerizable monomer, it is more preferable that at least 70 mass% is a polyfunctional polymerizable monomer, and it is yet more preferable that at least 90 mass% is a polyfunctional polymerizable monomer.

Furthermore, the clear ink composition preferably comprises a monofunctional polymerizable monomer as the monofunctional polymerizable compound. It is preferable that at least 50 mass% of the monofunctional polymerizable compound is a monofunctional polymerizable monomer, it is more preferable that at least 70 mass% is a monofunctional polymerizable monomer, and it is yet more preferable that the entire amount (100 mass%) of the monofunctional polymerizable monomer is a monofunctional polymerizable monomer.

### (Component A') Monofunctional polymerizable compound

The clear ink composition may comprise (Component A') a monofunctional polymerizable compound, and preferably comprises Component A'.

As Component A', a monofunctional (meth)acrylate monomer explained as the monofunctional (meth)acrylate (Component A-2) for the colored ink composition is preferable, and among them a monofunctional (meth)acrylate monomer selected from the group consisting of (a-1) to (a-8) is more preferable.

Among them, isobornyl (meth)acrylate is preferable, and isobornyl acrylate is more preferable.

### (Component B') Polyfunctional polymerizable compound

The clear ink composition preferably comprises (Component B') a polyfunctional polymerizable compound. As Component B', a polyfunctional polymerizable monomer can be cited as a preferable example, and a polyfunctional (meth)acrylate monomer is particularly preferable.

The polyfunctional (meth)acrylate monomer is not particularly limited as long as it is a monomer comprising two or more acryloyl groups and/or methacryloyl groups in total, and a known polyfunctional (meth)acrylate monomer may be selected appropriately and used.

The polyfunctional (meth)acrylate monomer may comprise two or more (meth)acryloyl groups in total, preferably comprises 2 to 6 (di- to hexafunctional), more preferably comprises 2 to 4 (di- to tetra-functional), and yet more preferably comprises 2 or 3 (difunctional or trifunctional).

Furthermore, the clear ink composition preferably comprises at least a difunctional polymerizable compound as the polyfunctional polymerizable compound, and more preferably comprises at least a difunctional polymerizable compound and a trifunctional polymerizable compound.

The clear ink composition preferably comprises a polyfunctional polymerizable compound having a glass transition temperature (Tg) of at least 80°C as the polyfunctional polymerizable monomer, and more preferably comprises a polyfunctional polymerizable monomer having a glass transition temperature (Tg) of at least 80°C. Due to it comprising a polyfunctional polymerizable compound having a Tg of at least 80°C, a molded printed material having a better textured feel is obtained, and sticking to a mold is further suppressed.

Here, the glass transition temperature of a polyfunctional polymerizable compound means the glass transition temperature of a homopolymer of the polyfunctional polymerizable compound. Specifically, a polymerization initiator is added to a polyfunctional polymerizable compound, thus giving a homopolymer having a weight-average molecular weight of at least 10,000. The glass transition temperature (Tg) is measured by for example a differential scanning calorimeter in accordance with ASTM D3418-8.

Although the glass transition temperature (Tg) varies according to molecular weight, when the weight-average molecular weight is at least 10,000, the variation in Tg due to molecular weight is negligible.

The glass transition temperature is preferably at least 80°C, more preferably 80°C to 300°C, yet more preferably 85°C to 300°C, and particularly preferably 90°C to 300°C.

The clear ink composition preferably comprises a polyfunctional polymerizable compound having a Tg of at least 80°C, and preferably a polyfunctional polymerizable monomer having a Tg of at least 80°C, in an amount of at least 30 mass% of the ink composition, more preferably 40 to 90 mass%, and yet more preferably 55 to 85 mass%.

Furthermore, of the polyfunctional polymerizable monomer contained in the clear ink composition, at least 50 mass% is preferably a polyfunctional polymerizable monomer having a Tg of at least 80°C, and more preferably at least 70 mass%. When within this range, hardness is excellent, and sticking to a mold is suppressed effectively.

As the polyfunctional polymerizable compound, the polyfunctional polymerizable monomers below can be cited as preferred examples, but the present invention should not be construed as being limited to these compound examples.
▪ b-1: 3-methyl-1,5-pentanediol diacrylate (Tg: 105°C)
▪ b-2: dipropylene glycol diacrylate (Tg: 101 °C)
▪ b-3: tripropylene glycol diacrylate (Tg: 90°C)
▪ b-4: neopentyl glycol diacrylate (Tg: 117°C)
▪ b-5: tricyclodecanedimethanol diacrylate (Tg: 186°C)
▪ b-6: trimethylolpropane triacrylate (Tg: > 250°C)
▪ b-7: dioxane diacrylate (Tg: 156°C)
▪ b-8: 1,10-decanediol diacrylate (Tg: 91 °C)
▪ b-9: pentaerythritol triacrylate (Tg: > 250°C)
▪ b-10: pentaerythritol tetraacrylate (Tg: > 250°C)
▪ b-11: ditrimethylolpropane tetraacrylate (Tg: > 250°C)
▪ b-12: dipentaerythritol pentaacrylate (Tg: > 250°C)

The clear ink composition preferably comprises at least one polyfunctional polymerizable monomer having a Tg of at least 80°C selected from the group consisting of b-1 to b-12; one type may be used on its own, or two or more types may be used in combination.

Among them, the clear ink composition more preferably comprises b-5, and particularly preferably comprises b-5 and b-6. When in this mode, a molded printed material having a better textured feel is obtained, and sticking to a mold is further suppressed.

The clear ink composition may comprise, in addition to the above polyfunctional polymerizable monomer, another polyfunctional polymerizable monomer.

Specific examples include bis(4-acryloxypolyethoxyphenyl)propane, ethoxylated (2) neopentyl glycol di(meth)acrylate (a compound in which a 2 mole ethylene oxide adduct of neopentyl glycol is di(meth)acrylated), propoxylated (2) neopentyl glycol di(meth)acrylate (a compound in which a 2 mole propylene oxide adduct of neopentyl glycol is di(meth)acrylated), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, tetrapropylene glycol di(meth)acrylate, polypropylene glycol di(meth)acrylate, ethoxylated trimethylolpropane tri(meth)acrylate, pentaerythritol tetra(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, caprolactone-modified dipentaerythritol hexa(meth)acrylate, and propylene glycol di(meth)acrylate.

Furthermore, the clear ink composition also preferably comprises a polyfunctional polymerizable oligomer, which is described above for the colored ink composition, and the polyfunctional polymerizable oligomer is preferably a silicone-based oligomer.

The silicone-based oligomer is preferably a silicone-based (meth)acrylate oligomer, and from the viewpoint of achieving a balance between curability and adhesion, the silicone-based (meth)acrylate oligomer is preferably contained at 0.01 to 10 mass% in the clear ink composition, more preferably 0.05 to 5 mass%, and yet more preferably 0.1 to 3 mass%.

### (Component C) Polymerization initiator

In the present invention, the ink composition (the colored ink composition and the clear ink composition) preferably comprises (Component C) a polymerization initiator, and more preferably comprises a radical polymerization initiator as the polymerization initiator.

As the radical polymerization initiator, a known radical polymerization initiator may be used. With regard to the radical polymerization initiator that can be used in the present invention, one type may be used on its own or two or more types may be used in combination. Furthermore, a radical polymerization initiator and a cationic polymerization initiator may be used in combination.

The radical polymerization initiator that can be used in the present invention is a compound that absorbs external energy to thus generate a polymerization initiating species. The external energy used for initiating polymerization can be roughly divided into heat and actinic radiation, and a thermopolymerization initiator and a photopolymerization initiator are used respectively. Examples of the actinic radiation include γ-rays, β-rays, an electron beam, UV, visible light, and infrared.

Examples of the radical polymerization initiator that can be used in the present invention include (a) an aromatic ketone, (b) an acylphosphine compound, (c) an aromatic onium compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (I) a compound comprising a carbon-halogen bond, and (m) an alkylamine compound. With regard to these radical polymerization initiators, compounds (a) to (m) above may be used singly or in combination. The radical polymerization initiator in the present invention may suitably be used singly or in a combination of two or more types.

In the present invention, Component C is preferably an acylphosphine oxide compound, and more preferably (Component C-1) a bisacylphosphine oxide compound and/or (Component C-2) a monoacylphosphine oxide compound.

Preferred examples of Component C-1 and Component C-2, which is described later, include bisacylphosphine oxide compounds and monoacylphosphine oxide compounds described in paragraphs 0080 to 0098 of JP-A-2009-096985.

The bisacylphosphine oxide compound is preferably bis(2,4,6-trimethylbenzoyl)phenylphosphine oxide (IRGACURE 819, BASF Japan).

The monoacylphosphine oxide compound is preferably 2,4,6-trimethylbenzoyldiphenylphosphine oxide (Darocur TPO: BASF Japan).

In the present invention, the colored ink composition particularly preferably comprises (Component C-1) a bisacylphosphine oxide compound and (Component C-2) a monoacylphosphine oxide compound.

Furthermore, the colored ink composition preferably comprises at least a bisacylphosphine oxide compound (Component C-1) as Component C. Due to the colored ink composition comprising Component C-1, high sensitivity is obtained with a small amount added. The bisacylphosphine oxide compound can improve the sensitivity of an ink with a small amount added compared with a monoacylphosphine oxide compound, but since a printed material is sometimes colored yellow, it is preferable to use a bisacylphosphine oxide compound and a monoacylphosphine oxide compound in combination for a color ink composition, for which yellowing of an image is inconspicuous compared with the clear ink composition.

In the colored ink composition, when the total amount of the radical polymerization initiator is 100 parts by mass, the total amount of Component C-1 and Component C-2 is preferably at least 20 parts by mass, more preferably at least 25 parts by mass, and yet more preferably at least 30 parts by mass.

Furthermore, in the present invention, the clear ink composition preferably comprises (Component C-2) a monoacylphosphine oxide compound as the polymerization initiator (Component C).

Due to the clear ink composition comprising (Component C-2) a monoacylphosphine oxide compound as the polymerization initiator (Component C), yellowing of an image is suppressed, and excellent curability is obtained.

When the total amount of the radical polymerization initiator is 100 parts by mass, the clear ink composition preferably comprises a monoacylphosphine oxide compound in an amount of at least 50 parts by mass, preferably comprises 60 to 100 parts by mass, more preferably at least 70 to 100 parts by mass, and preferably substantially 100 parts by mass.

The ink composition of the present invention preferably comprises (Component C-3) a thioxanthone compound and/or a thiochromanone compound. In particular, the colored ink composition preferably comprises Component C-3 from the viewpoint of curability.

Examples of the thioxanthone compound include thioxanthone, 2-isopropylthioxanthone, 4-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinoethylthioxanthone, *n-*allylthioxanthone-3,4-dicarboximide, *n*-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-*N*,*N*,*N-*trimethyl-1-propanaminium chloride.

Among them, from the viewpoint of ready availability and curability, 2,4-diethylthioxanthone, 2-isopropylthioxanthone, and 4-isopropylthioxanthone are more preferable.

Preferred examples of the thiochromanone compound include thiochromanone compounds described in paragraphs 0039 to 0054 of JP-A-2009-084423.

Among them, (I-14), (I-17), and (1-19) are more preferable, and (1-14) is particularly preferable.

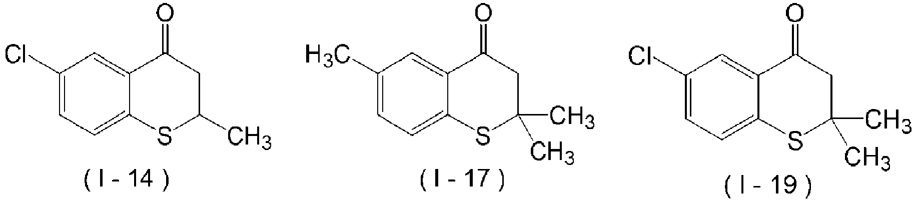

### <Other polymerization initiator>

The ink composition of the present invention may comprise a polymerization initiator other than Component C-1 to Component C-3. As the other polymerization initiator, (Component C-4) an alkylphenone compound is preferable.

Preferred examples of the alkylphenone compound include commercial products such as IRGACURE 184 (BASF Japan), IRGACURE 369 (BASF Japan), IRGACURE 379 (BASF Japan), IRGACURE 907 (BASF Japan), and IRGACURE 2959 (BASF Japan).

From the viewpoint of curability, the content of the alkylphenone compound (Component C-4) is preferably 0.1 to 15 mass% of the ink composition, more preferably 0.5 to 10 mass%, and yet more preferably 1 to 5 mass%.

Further examples of the other polymerization initiator include an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound comprising a carbon-halogen bond. Details of the polymerization initiator are known to a person skilled in the art, and are described in for example paragraphs 0090 to 0116 of JP-A-2009-185186.

The content of the radical polymerization initiator in the colored ink composition is preferably 1 to 20 mass% of the colored ink composition, more preferably 2 to 18 mass%, and yet more preferably 3 to 16 mass%.

The content of the radical polymerization initiator in the clear ink composition is preferably 1 to 20 mass%, more preferably 3 to 18 mass%, and yet more preferably 5 to 16 mass%.

When the content of the radical polymerization initiator in the colored ink composition and the clear ink composition is within the above ranges, curability is excellent.

### (Component D) Colorant

The colored ink composition in the present invention comprises (Component D) a colorant appropriate for its color.

The clear ink composition comprises substantially no colorant (Component D). As described above, 'comprising substantially none' means that the content of Component D is no greater than 1 mass% of the clear ink composition. The content of Component D in the clear ink composition is preferably no greater than 0.5 mass%, more preferably no greater than 0.1 mass%, yet more preferably no greater than 0.05 mass%, and particularly preferably none. However, the present invention does not exclude a case in which in order to adjust the hue, the clear ink composition comprises a blue pigment, etc. in a trace amount (no greater than 1 mass%).

The colorant that can be used is not particularly limited, and various known pigments and dyes may be appropriately selected and used according to the intended application. Among them, as a colorant contained in a colored ink composition, a pigment is preferable, in particular from the viewpoint of excellent lightfastness.

The pigment preferably used in the present invention is now explained.

The pigment is not particularly limited, and all generally commercially available organic pigments and inorganic pigments, those formed by dyeing resin particles with a dye, etc. may be used. Furthermore, a commercially available pigment dispersion or a surface-treated pigment, for example, a pigment that has been dispersed in an insoluble resin as a dispersion medium, etc., a pigment having a resin grafted on the surface, etc. may be used as long as the effects of the present invention are not impaired.

Examples of these pigments include pigments described in 'Pigment Dictionary' Ed. by S. Ito (2000), W. Herbst and K. Hunger 'Industrial Organic Pigments', JP-A-2002-12607, JP-A-2002-188025, JP-A-2003-26978, and JP-A-2003-342503.

With regard to specific examples of the organic pigment and inorganic pigment that can be used in the present invention, those exhibiting a yellow color include a monoazo pigment such as C.I. Pigment Yellow 1 (fast yellow G, etc.) or C.I. Pigment Yellow 74, a disazo pigment such as C.I. Pigment Yellow 12 (disazo yellow AAA, etc.) or C.I. Pigment Yellow 17, a nonbenzidine-based azo pigment such as C.I. Pigment Yellow 180, an azo lake pigment such as C.I. Pigment Yellow 100 (tartrazine yellow lake, etc.), a condensed azo pigment such as C.I. Pigment Yellow 95 (condensed azo yellow GR, etc.), an acidic dye lake pigment such as C.I. Pigment Yellow 115 (quinoline yellow lake, etc.), a basic dye lake pigment such as C.I. Pigment Yellow 18 (thioflavin lake, etc.), an anthraquinone-based pigment such as flavanthrone yellow (Y-24), an isoindolinone pigment such as isoindolinone yellow 3RLT (Y-110), a quinophthalone pigment such as quinophthalone yellow (Y-138), an isoindoline pigment such as isoindoline yellow (Y-139), a nitroso pigment such as C.I. Pigment Yellow 153 (nickel nitroso yellow, etc.), and a metal complex salt azomethine pigment such as C.I. Pigment Yellow 117 (copper azomethine yellow, etc.).

Those exhibiting a red or magenta color include a monoazo-based pigment such as C.I. Pigment Red 3 (toluidine red, etc.), a disazo pigment such as C.I. Pigment Red 38 (pyrazolone red B, etc.), an azo lake pigment such as C.I. Pigment Red 53:1 (lake red C, etc.) or C.I. Pigment Red 57:1 (brilliant carmine 6B), a condensed azo pigment such as C.I. Pigment Red 144 (condensed azo red BR, etc.), an acidic dye lake pigment such as C.I. Pigment Red 174 (phloxine B lake, etc.), a basic dye lake pigment such as C.I. Pigment Red 81 (rhodamine 6G' lake, etc.), an anthraquinone-based pigment such as C.I. Pigment Red 177 (dianthraquinonyl red, etc.), a thioindigo pigment such as C.I. Pigment Red 88 (thioindigo Bordeaux, etc.), a perinone pigment such as C.I. Pigment Red 194 (perinone red, etc.), a perylene pigment such as C.I. Pigment Red 149 (perylene scarlet, etc.), a quinacridone pigment such as C.I. Pigment Violet 19 (unsubstituted quinacridone) or C.I. Pigment Red 122 (quinacridone magenta, etc.), an isoindolinone pigment such as C.I. Pigment Red 180 (isoindolinone red 2BLT, etc.), and an alizarin lake pigment such as C.I. Pigment Red 83 (madder lake, etc.).

Pigments exhibiting a blue or cyan color include a disazo-based pigment such as C.I. Pigment Blue 25 (dianisidine blue, etc.), a phthalocyanine pigment such as C.I. Pigment Blue 15 (phthalocyanine blue, etc.), an acidic dye lake pigment such as C.I. Pigment Blue 24 (peacock blue lake, etc.), a basic dye lake pigment such as C.I. Pigment Blue 1 (Vicrotia pure blue BO lake, etc.), an anthraquinone-based pigment such as C.I. Pigment Blue 60 (indanthrone blue, etc.), and an alkali blue pigment such as C.I. Pigment Blue 18 (alkali blue V-5:1).

Pigments exhibiting a green color include a phthalocyanine pigment such as C.I. pigment green 7 (phthalocyanine green) or C.I. pigment green 36 (phthalocyanine green) and an azo metal complex pigment such as C.I. pigment green 8 (nitroso green).

Pigments exhibiting an orange color include an isoindoline-based pigment such as C.I. pigment orange 66 (isoindoline orange) and an anthraquinone-based pigment such as C.I. pigment orange 51 (dichloropyranthrone orange).

Pigments exhibiting a black color include carbon black, titanium black, and aniline black.

Specific examples of a white pigment that can be used include basic lead carbonate (2PbCO₃Pb(OH)₂, the so-called silver white), zinc oxide (ZnO, the so-called zinc white), titanium oxide (TiO₂, the so-called titanium white), and strontium titanate (SrTiO₃, the so-called titanium strontium white).

Here, since titanium oxide has a low specific gravity and a high refractive index compared with other white pigments and is chemically and physically stable, it has high covering power or coloring power as a pigment and is excellent in terms of durability toward acid, alkali, and other environments. Therefore, it is preferable to use titanium oxide as a white pigment. Of course, another white pigment (which may be a white pigment other than those listed) may be used as necessary.

For dispersion of the colorant, a dispersing apparatus such as for example a ball mill, a sand mill, an attritor, a roll mill, a jet mill, a homogenizer, a paint shaker, a kneader, an agitator, a Henschel mixer, a colloid mill, a ultrasonic homogenizer, a pearl mill, or a wet jet mill may be used.

When dispersing the colorant, a dispersant such as a surfactant may be added.

When adding the colorant, a synergist according to the various types of colorants may be used as a dispersion adjuvant as necessary. It is preferable that the dispersion adjuvant to be added at 1 to 50 parts by mass relative to 100 parts by mass of the colorant.

As a dispersion medium for various components such as the colorant in the colored ink composition, a solvent may be added; alternatively, without using a solvent, the polymerizable compound, which is a low-molecular-weight component, may be used as the dispersion medium. The colored ink composition is preferably a radiation-curable liquid and is preferably solvent-free since it is cured after the colored ink composition is applied above a recording medium. This is because if solvent remains in an image formed from a cured colored ink composition, problems such as degradation of solvent resistance and VOC (Volatile Organic Compound) due to residual solvent occur. From such a viewpoint, it is preferable to use a polymerizable compound as the dispersion medium, and in particular to select a polymerizable compound having low viscosity from the viewpoint of dispersion suitability or improving the ease of handling of the ink composition.

The average particle size of the colorant used here is preferably 0.01 to 0.4 µm since the finer it is the better the coloration, and is more preferably in the range of 0.02 to 0.2 µm. The maximum particle size is set so as to be preferably no greater than 3 µm, and more preferably no greater than 1 µm, by selecting the colorant, the dispersant, and the dispersion medium and setting dispersion conditions and filtration conditions. Due to this particle size control, it is possible to suppress clogging of a head nozzle and maintain storage stability, transparency, and curing sensitivity of a colored ink composition. Due to the use in the present invention of the dispersant, which gives excellent dispersibility and stability, even when a microparticulate colorant is used, a uniform and stable dispersion is obtained.

The particle size of the colorant may be measured by a known measurement method. Specifically, it may be measured by a centrifugal sedimentation light transmission method, an X-ray transmission method, a laser diffraction/scattering method, or a dynamic light scattering method. In the present invention, a value obtained by measurement using a laser diffraction/scattering method is employed.

The content of the colorant in the colored ink composition is selected appropriately according to the color and the intended application, but from the viewpoint of image density and storage stability the content is preferably 0.5 to 30 mass% relative to the mass of the entire colored ink composition, more preferably 1.0 to 20 mass%, and particularly preferably 2.0 to 20 mass%.

### -Other components-

The ink composition may comprise as necessary in addition to the above components a surfactant, a polymerization inhibitor, a sensitizer, a co-sensitizer, a UV absorber, an antioxidant, an antifading agent, a conductive salt, a solvent, a macromolecular compound, a basic compound, a leveling additive, a matting agent and, for adjusting film physical properties, a polyester-based resin, a polyurethane-based resin, a vinyl-based resin, an acrylic-based resin, a rubber-based resin, and a wax. They are described in JP-A-2009-185186 and may also be used in the present invention.

In the present invention, the ink composition may comprise a surfactant.

Examples of the surfactant used in the present invention include the surfactants below. For example, those described in JP-A-62-173463 and JP-A-62-183457 can be cited. Specific examples include an anionic surfactant such as a dialkylsulfosuccinate, an alkylnaphthalenesulfonate, or a fatty acid salt, a nonionic surfactant such as a polyoxyethylene alkyl ether, a polyoxyethylene alkyl allyl ether, an acetylene glycol, or a polyoxyethylene/polyoxypropylene block copolymer, and a cationic surfactant such as an alkylamine salt or a quaternary ammonium salt. As the known surfactants, an organofluorine compound may be used. The organofluorine compound is preferably hydrophobic. Examples of the organofluorine compound include a fluorine-based surfactant, an oily fluorine-based compound (e.g. a fluorine oil), a solid fluorine compound resin (e.g. a tetrafluoroethylene resin), and those described in JP-B-57-9053 (JP-B denotes a Japanese examined patent application publication) (paragraphs 8 to 17) and JP-A-62-135826.

The surfactant used in the present invention is not particularly limited to the above surfactants and may be an additive that has the ability to lower the surface tension efficiently relative to the concentration added.

The amount of surfactant added is not particularly limited, but from the viewpoint of stable discharge properties and a desired range of surface tension it is preferably 0.05 to 5 mass% of the entire ink, more preferably 0.1 to 3 mass%, and particularly preferably 0.3 to 2 mass%.

From the viewpoint of enhancing storage stability the ink composition preferably comprises a polymerization inhibitor.

When the ink composition is used as an inkjet ink composition, it is preferable to carry out discharge by heating at a temperature in the range of 25°C to 80 °C so as to lower the viscosity, and in order to prevent head clogging due to thermal polymerization it is preferable to add a polymerization inhibitor. With regard to the polymerization inhibitor, one type may be used on its own or a plurality thereof may be used in combination, but it is preferable to use two or more types in combination.

Examples of the polymerization inhibitor include a nitroso-based polymerization inhibitor, hydroquinone, benzoquinone, p-methoxyphenol, an *N*-oxyl-based polymerization inhibitor (TEMPO, TEMPOL (4-hydroxy TEMPO), etc.), Al cupferron, and a hindered amine, and among them a nitroso-based polymerization inhibitor, a hindered amine-based polymerization inhibitor, a phenol-based polymerization inhibitor, and an *N*-oxyl-based polymerization inhibitor are preferable. With regard to a preferred combination of polymerization inhibitors, for the colored ink composition a combination of polymerization inhibitors selected from the group consisting of a nitroso-based polymerization inhibitor, a hindered amine-based polymerization inhibitor, a phenol-based polymerization inhibitor, and an *N*-oxyl-based polymerization inhibitor is preferable, and a combination of a nitroso-based polymerization inhibitor and an *N*-oxyl-based polymerization inhibitor is particularly preferable.

Specific examples of the nitroso-based polymerization inhibitor preferably used in the present invention are shown below, but the nitroso-based polymerization inhibitor is no limited thereto.

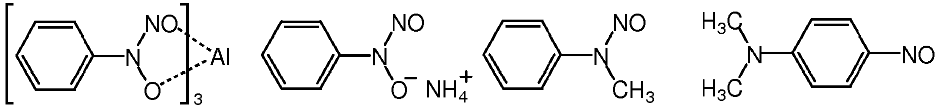

Examples of commercially available nitroso-based polymerization inhibitors include FIRSTCURE ST-1 (Chem First), UV-12 (tris(*N*-nitroso-*N-*phenylhydroxyamine) aluminum salt, Kroma Chem). Examples of commercially available hindered amine-based polymerization inhibitors include TINUVIN 292, TINUVIN 770DF, TINUVIN 765, and TINUVIN 123. Examples of commercially available phenol-based polymerization inhibitors include MEHQ (4-methoxyphenol). Examples of commercially available N-oxyl-based polymerization inhibitors include TEMPO (2,2,6,6-tetramethylpiperidine-*N*-oxyl) and TEMPOL (4-hydroxy TEMPO).

The content of the polymerization inhibitor in the ink composition is preferably 0.01 to 5 mass%, more preferably 0.1 to 4 mass%, and particularly preferably 0.5 to 4 mass%. When in this range, polymerization can be suppressed when the ink composition is prepared and stored, and clogging of an inkjet nozzle can be prevented.

The ink composition preferably comprises a dispersant. In particular, when a pigment is used, in order to stably disperse the pigment in the ink composition, it preferably comprises a dispersant. The dispersant is preferably a polymeric dispersant. The 'polymeric dispersant' in the present invention means a dispersant having a weight-average molecular weight of at least 1,000.

The content of the dispersant in the ink composition is selected as appropriate according to the intended application, but it is preferably 0.05 to 15 mass% relative to the mass of the entire ink composition.

### -Ink physical properties-

The ink composition preferably has a viscosity at 25°C of no greater than 40 mPa·s while taking into consideration discharge properties. It is more preferably 5 to 40 mPa·s, and yet more preferably 7 to 30 mPa·s. Furthermore, the viscosity at the discharge temperature (preferably 25°C to 80°C, and more preferably 25°C to 50°C) is preferably 3 to 15 mPa·s, and more preferably 3 to 13 mPa·s. It is preferable to appropriately adjust the compositional ratio of the ink composition so that the viscosity is in the above range. It is preferable to set the viscosity at room temperature so as to be high since the ink can be prevented from penetrating into a recording medium even when a porous recording medium is used, thereby reducing uncured monomer. Furthermore, spreading of the ink when ink droplets have been fired and have landed can be suppressed, and as a result image quality is improved, which is preferable.

The viscosity is a viscosity determined using a model RE80 viscometer manufactured by Toki Sangyo Co., Ltd. The model RE80 viscometer is a conical rotor/flat plate system E-type viscometer, and measurement is carried out at a rotational speed of 10 rpm using a rotor code No. 1 rotor. In the case of a viscosity of higher than 60 mPa·s, measurement was carried out by changing the rotational speed as necessary to 5 rpm, 2.5 rpm, 1 rpm, 0.5 rpm, etc.

The surface tension at 25°C of the ink composition is preferably 18 to 40 mN/m, and more preferably 20 to 35 mN/m. When in this range, sticking to a mold can be suppressed.

Here, the surface tension may be measured at 25°C by the Wilhelmy method using a standard surface tensiometer (e.g. a CBVP-Z surface tensiometer manufactured by Kyowa Interface Science Co., Ltd.).

In the present invention, it is preferable to use as the colored ink compositions at least a yellow ink composition, a magenta ink composition, a cyan ink composition, and a black ink composition, it is more preferable to use at least a yellow ink composition, a magenta ink composition, a cyan ink composition, a black ink composition, and a white ink composition, and an ink composition of another color may further be used.

Specifically, it is preferable to further use a light cyan or light magenta ink composition, and in this case the colored ink composition preferably comprises a total of six colors, that is, a yellow ink composition, a magenta ink composition, a cyan ink composition, a black ink composition, a light cyan ink composition, and a light magenta ink composition.

A 'dark color ink composition' in the present invention means an ink composition having a colorant content of greater than 1 mass% of the entire ink composition. The colorant is not particularly limited; a known colorant may be used, and examples include a pigment and a disperse dye.

Furthermore, when at least one dark color ink composition and at least one light color ink composition are used as the colored ink compositions, and the dark color ink composition and the light color ink composition employ a colorant of the same color system, the ratio of the colorant density of the dark color ink composition and the light color ink composition is preferably dark color ink composition:light color ink composition = 15:1 to 4:1, more preferably 12:1 to 4:1, and yet more preferably 10:1 to 4.5:1. When in this range, a vivid full color image giving a reduced impression of grain can be obtained.

Furthermore, it is preferable to use a white ink composition as the colored ink composition. The white ink composition is an ink composition comprising a white pigment.

The white ink composition is also preferably formed as a substantially uniform layer on the uppermost layer of an image layer as described above.

### <Inkjet recording method and inkjet recording equipment>

In the present invention, both the clear ink composition and the colored ink composition are preferably inkjet ink compositions.

In the present invention, the minimum droplet volume of a nozzle for discharging a colored ink composition is preferably at least 5 pL but less than 40 pL, and the minimum droplet volume of a nozzle for discharging a clear ink composition is preferably at least 20 pL but no greater than 60 pL.

The clear ink composition is not for forming a high-resolution color image and is not required to have high resolution. On the other hand, the colored ink composition is for forming a color image and is required to have high resolution. The minimum droplet volume of the nozzle for discharging the clear ink composition is made large compared with the minimum droplet volume for the nozzle for discharging the colored ink composition, thereby giving high productivity.

The image layer formation step and/or the projection formation step preferably comprise (a¹) a step of discharging an inkjet ink composition above a substrate by an inkjet method, and (b¹) a step of irradiating the discharged inkjet ink composition with actinic radiation to thus cure the inkjet ink composition.

Furthermore, the image layer formation step and/or the projection formation step more preferably comprise (a²) a step of discharging an inkjet ink composition above a substrate by an inkjet method, (b²) a step of irradiating the discharged inkjet ink composition with actinic radiation so as to provisionally cure the inkjet ink composition to form a provisionally cured film, and (c²) a step of irradiating the provisionally cured film with actinic radiation so as to completely cure it.

In the present invention, due to the image layer formation step and/or the projection formation step comprising steps (a¹) and (b¹) or steps (a²) to (c²) above, an image layer or a projection is formed above the substrate from the cured ink composition.

Furthermore, the inkjet recording method of the present invention may be carried out in a multipass mode in which steps (a¹) and (b¹) or steps (a²) to (c²) are carried out two or more times for one and the same area above the recording medium, that is, one and the same area is printed by superimposition, or may be carried out in a single pass mode in which an image is formed by one scan, but the multipass mode is preferable.

Steps (a¹) and (a²) above may employ inkjet recording equipment, which is described below.

The inkjet recording equipment that can be used in the present invention is not particularly limited, and known inkjet recording equipment that can achieve a target resolution may be freely selected and used. That is, as long as it is known inkjet recording equipment, including commercial products, any equipment may carry out discharge of an ink composition above a recording medium in steps (a¹) and (a²) above.

Examples of the inkjet recording equipment that can be used in the present invention include equipment comprising an ink supply system, a temperature sensor, and an actinic radiation source.

The ink supply system comprises, for example, a main tank containing the ink composition of the present invention, a supply pipe, an ink supply tank immediately before an inkjet head, a filter, and a piezo type inkjet head. The piezo type inkjet head is driven so as to discharge multi-size dots of preferably 1 to 100 pL, and more preferably 8 to 30 pL, at a resolution of preferably 320 × 320 to 4,000 × 4,000 dpi (dot per inch), more preferably 400 × 400 to 1,600 × 1,600 dpi, and yet more preferably 720 × 720 dpi. In the present invention dpi denotes the number of dots per 2.54 cm.

As described above, since the temperature of the discharged ink composition is desirably constant, the inkjet recording equipment is preferably equipped with means for stabilizing the temperature of the ink composition. The section for which the temperature is made constant includes the whole of a piping system and all of the members from an ink tank (intermediate tank where it is present) to a nozzle injection face. That is, a section from the ink supply tank to the inkjet head may be thermally insulated and heated.

A method for controlling temperature is not particularly limited, but it is preferable to provide, for example, temperature sensors at a plurality of piping locations, and control heating according to the ink composition flow rate and the temperature of the surroundings. The temperature sensors may be provided on the ink supply tank and in the vicinity of the inkjet head nozzle. Furthermore, the head unit that is to be heated is preferably thermally shielded or insulated so that the main body is not influenced by the temperature of the outside air. In order to reduce the printer start-up time required for heating, or in order to reduce the thermal energy loss, it is preferable to thermally insulate the unit from other sections and also to reduce the heat capacity of the entire heated unit.

When the ink composition is discharged using the inkjet method, the ink composition is preferably discharged after being heated to preferably 25°C to 80 °C, and more preferably 25°C to 50°C, so as to reduce the viscosity of the ink composition to preferably 3 to 15 mPa·s, and more preferably 3 to 13 mPa·s. In particular, it is preferable to use an ink composition having an ink viscosity at 25°C of no greater than 50 mP·s as the ink composition of the present invention since discharge can be carried out well. By employing this method, high discharge stability can be realized.

Since a radiation-curable ink composition generally has a viscosity that is higher than that of an aqueous ink composition usually used for an inkjet recording ink composition, variation in viscosity due to changes in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of the ink composition is preferably ±5°C of a set temperature, more preferably ±2°C of the set temperature, and yet more preferably ±1 °C of the set temperature.

Step (b¹), step (b²), and step (c²) are now explained.

The ink composition discharged onto a substrate cures upon exposure to actinic radiation (radiation). This is because a polymerization initiator contained in the ink composition decomposes upon exposure to actinic radiation and generates a polymerization initiating species such as a radical or a cation, and the initiating species has the function of causing and promoting a polymerization reaction of a polymerizable compound. In this process, if a sensitizer is present together with the polymerization initiator in the ink composition, the sensitizer in the system absorbs actinic radiation, attains an excited state, and by contacting the polymerization initiator promotes decomposition of the polymerization initiator, thus enabling a curing reaction with higher sensitivity to be achieved.

The actinic radiation used here is α-rays, γ-rays, an electron beam, X-rays, UV, visible light, infrared light, etc. The peak wavelength of actinic radiation depends on the absorption characteristics of the sensitizer and, for example, is preferably 200 to 600 nm, more preferably 300 to 450 nm, and yet more preferably 320 to 420 nm, and it is particularly preferable that the actinic radiation is UV having a peak wavelength in the range of 340 to 400 nm.

Moreover, the polymerization initiating system of the ink composition has sufficient sensitivity even for low output actinic radiation. It is therefore desirable to cure it with an exposure area illumination intensity of preferably 10 to 4,000 mW/cm², and more preferably 20 to 2,500 mW/cm².

As an actinic radiation source, a mercury lamp, a gas/solid laser, etc. are mainly used, and as a light source used for curing of a UV-curable inkjet recording ink composition, a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, other ultraviolet LEDs are available, and irradiation can be carried out with radiation of a different UV bandwidth. Among these, a preferred actinic radiation source is a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition is desirably exposed to such actinic radiation preferably for 0.01 to 120 sec, and more preferably 0.1 to 90 sec.

Irradiation conditions for the actinic radiation and basic irradiation methods are disclosed in JP-A-60-132767. Specifically, light sources are provided on opposite sides of a head unit comprising an ink composition discharge system, and the head unit and the light sources are made to scan by a so-called shuttle system. Irradiation with actinic radiation is carried out after a fixed period of time (preferably 0.01 to 0.5 sec, more preferably 0.01 to 0.3 sec, and yet more preferably 0.01 to 0.15 sec) has elapsed after the ink composition has landed. By controlling the time from after the ink composition has landed until before the irradiation so that it is a very short time, it is possible to prevent the ink composition that has landed on a recording medium from spreading before being cured. Furthermore, when a porous recording medium is used, since exposure can be carried out before the ink composition penetrates to a deep part where the light source cannot reach, it is possible to suppress residual unreacted monomer, which is preferable.

Moreover, curing may be completed by another light source that is not driven. International patent application WO 99/54415 discloses as an irradiation method a method employing optical fiber or a method in which a collimated light source is shone on a mirror surface provided on a side face of a head unit and a recording area is irradiated with UV rays, and such a curing method can also be applied to the inkjet recording method of the present invention.

By employing the above-mentioned inkjet recording method, it is possible to keep the diameter of landed ink composition dots constant even for various recording media having different surface wettabilities, thus improving the image quality. In order to obtain a color image, it is preferable to superimpose in order from low lightness colors. By superimposing in order from low lightness ink compositions, it becomes easy for radiation to reach the ink composition in a lower part, and good curing sensitivity, reduction of residual monomer, and improvement in adhesion can be expected. Irradiation may be carried out all at once after all colors are discharged, or irradiation may be carried out for each color.

Furthermore, as described later, it is also preferable to discharge the ink composition, then irradiate the discharged ink composition with actinic radiation to thus provisionally cure (partially cure) the ink composition to form a provisionally cured film, and after that to irradiate the provisionally cured film with actinic radiation to thus completely cure it. Provisional curing (semi-curing) may be referred to in JP-A-2008-248070, JP-A-2009-221416, etc.

In this way, the ink composition cures with high sensitivity upon exposure to actinic radiation, thereby forming an image on the surface of a recording medium.

Suitable ways of forming images and projections by the inkjet method are explained below by reference to the drawings.

### (Overall configuration of inkjet recording equipment)

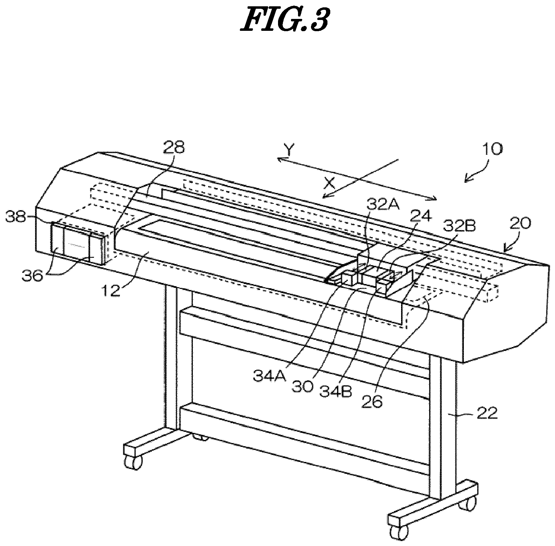

FIG. 3 is an external perspective view showing one example of inkjet recording equipment 10 suitably used in the present invention. This inkjet recording equipment 10 is a wide format printer that forms a color image above a recording medium (substrate) 12 using a UV-curable ink. The wide format printer is equipment that is suitable for recording on a wide printing region such as for a large size poster or a commercial wall advertisement. Here, one corresponding to A3+ or greater is called 'wide format'.

The inkjet recording equipment 10 comprises a main body 20 and support legs 22 for supporting the main body 20. The main body 20 is provided with a drop-on-demand type inkjet head 24 for discharging an ink toward a recording medium (media) 12, a platen 26 for supporting the recording medium 12, and a guide mechanism 28 and a carriage 30 as head movement means (scanning means).

The guide mechanism 28 is disposed above the platen 26 so as to extend perpendicular to the transport direction (X direction) of the recording medium 12 and along the scanning direction (Y direction), which is parallel to a medium support face of the platen 26. The carriage 30 is supported so that it can move reciprocatingly in the Y direction along the guide mechanism 28. The carriage 30 is equipped with the inkjet head 24, provisional curing light sources (pinning light sources) 32A and 32B for irradiating the ink above the recording medium 12 with UV, and main curing light sources (curing light sources) 34A and 34B.

The provisional curing light sources 32A and 32B are light sources for emitting UV for provisional curing of an ink to a degree such that adjacent droplets do not coalesce after ink droplets discharged from the inkjet head 24 land on the recording medium 12. The main curing light sources 34A and 34B are light sources for emitting UV for carrying out additional exposure after provisional curing and finally completely curing the ink (main curing). Although details are described later, either one or both of the main curing light sources 34A and 34B are configured so as to be movable in the X direction so as to be aligned in the Y direction with the inkjet head 24 and the provisional curing light sources 32A and 32B.

The inkjet head 24, the provisional curing light sources 32A and 32B, and the main curing light sources 34A and 34B disposed on the carriage 30 move integrally (together) with the carriage 30 along the guide mechanism 28. The reciprocating movement direction (Y direction) of the carriage 30 can be called a 'main scanning direction' and the transport direction (X direction) of the recording medium 12 can be called a 'sub scanning direction'.

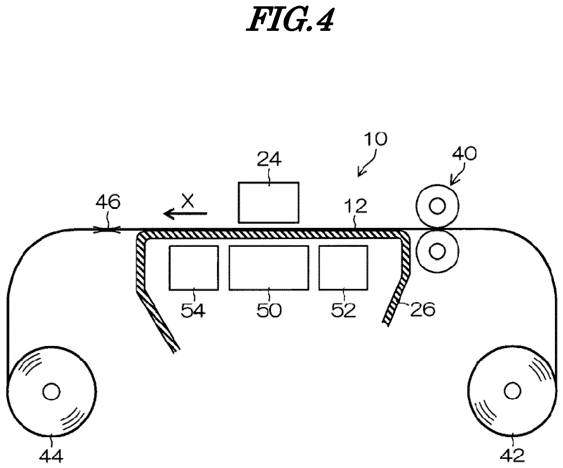

The recording medium 12 is fed from the back side of the equipment in a rolled state (see FIG. 4) and after printing is wound up by a wind-up roller (not illustrated in FIG. 3, reference number 44 in FIG. 4) on the front side of the equipment. Ink droplets are discharged from the inkjet head 24 onto the recording medium 12 transported on the platen 26, and the ink droplets attached to the recording medium 12 are irradiated with UV from the provisional curing light sources 32A and 32B and the main curing light sources 34A and 34B.

In FIG. 3, a mounting section 38 for an ink cartridge 36 is provided on the left-hand side of the front face of the main body 20. The ink cartridge 36 is a replaceable ink supply source (ink tank) storing a UV-curable ink. The ink cartridges 36 are provided so as to correspond to each color ink used in the inkjet recording equipment 10 of the present example. Each ink cartridge 36 for the respective color is connected to the inkjet head 24 via an independently formed ink supply route, which is not illustrated. When the amount of each color ink remaining becomes small, the ink cartridge 36 is replaced.

Furthermore, although it is not illustrated, a maintenance section for the inkjet head 24 is provided on the right-hand side of the front face of the main body 20. The maintenance section is provided with a cap for preventing the inkjet head 24 from drying out when not printing and a wiping member (blade, web, etc.) for cleaning a nozzle face (ink discharge face) of the inkjet head 24. The cap for capping the nozzle face of the inkjet head 24 is provided with an ink receptor for receiving ink droplets discharged from the nozzle for maintenance.

### -Explanation of recording medium transport route-

FIG. 4 is an explanatory view schematically showing a recording medium transport route in the inkjet recording equipment 10. As shown in FIG. 4, the platen 26 is formed in an inverted gutter shape, and its upper face acts as a support face for the recording medium 12 (medium support face). Disposed on the upstream side, in the recording medium transport direction (X direction), in the vicinity of the platen 26 are a pair of nip rollers 40 as recording medium transport means for intermittently transporting the recording medium 12. These nip rollers 40 move the recording medium 12 in the recording medium transport direction on the platen 26.

The recording medium 12, which is fed out from a supply-side roll (feed-out supply roll) 42 constituting medium transport means of a roll-to-roll system, is intermittently transported in the recording medium transport direction by means of the pair of nip rollers 40 provided at the entrance (upstream side in the recording medium transport direction of the platen 26) of a printing section. The recording medium 12 that has arrived at the printing section immediately below the inkjet head 24 is subjected to printing by the inkjet head 24 and wound up by the wind-up roll 44 after printing. A guide 46 for the recording medium 12 is provided on the downstream side in the recording medium transport direction of the printing section.

A temperature control section 50 for controlling the temperature of the recording medium 12 during printing is provided on the reverse face of the platen 26 (the face opposite to the face supporting the recording medium 12) at a position opposite the inkjet head 24 in the printing section. When the recording medium 12 during printing is controlled to have a predetermined temperature, values of physical properties such as viscosity or surface tension of ink droplets that have landed on the recording medium 12 attain desired values, and it becomes possible to obtain a desired dot size. If necessary, a pre-temperature control section 52 may be provided on the upstream side of the temperature control section 50, and a post-temperature control section 54 may be provided on the downstream side of the temperature control section 50.

### -Explanation of inkjet head-

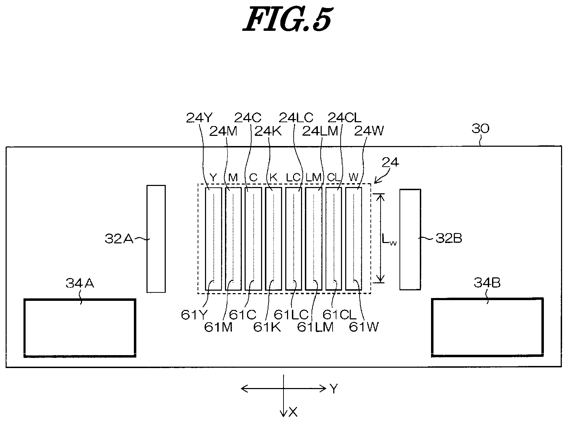

FIG. 5 is a transparent plan view showing an example of the configuration of the inkjet head 24, the provisional curing light sources 32A and 32B, and the main curing light sources 34A and 34B disposed on the carriage 30.

Nozzle arrays 61Y, 61M, 61C, 61K, 61LC, 61LM, 61CL, and 61W for discharging inks of each color are provided in the inkjet head 24 for inks of each of yellow (Y), magenta (M), cyan (C), black (K), light cyan (LC), light magenta (LM), clear (transparent) (CL), and white (W, option). In FIG. 5, the nozzle arrays are illustrated by dotted lines, and individual nozzles are not illustrated. In the explanation below, the nozzle arrays 61Y, 61M, 61C, 61K, 61LC, 61LM, 61CL, and 61W might collectively be denoted by reference numeral 61.

The type of ink colors (number of colors) and the combination of colors are not limited to those of the present embodiment. For example, a mode in which LC and LM nozzle arrays are omitted, a mode in which a W nozzle array is omitted, a mode in which a nozzle array for a metal ink is added, a mode in which a nozzle array for discharging a special color ink is added, etc. are possible. Furthermore, the order for the arrangement of color nozzle arrays is also not restricted. However, a configuration in which an ink having low curing sensitivity toward UV among the plurality of ink types is disposed on the side closer to the provisional curing light source 32A or 32B is preferable.

It is possible to form a head module for the nozzle array 61 of each color and form an inkjet head 24 that can carry out color drawing by arranging the head modules. For example, a mode in which a head module 24Y having the nozzle array 61Y for discharging a yellow ink, a head module 24M having the nozzle array 61M for discharging a magenta ink, a head module 24C having the nozzle array 61C for discharging a cyan ink, a head module 24K having the nozzle array 61K for discharging a black ink, and head modules 24LC, 24LM, 24CL, and 24W having the nozzle arrays 61LC, 61LM, 61CL, and 61W for discharging the respective LC, LM, CL, and W inks are disposed and arranged at equal intervals along the reciprocating movement direction (the main scanning direction, the Y direction) of the carriage 30 is also possible. A module group (head group) comprising the respective color head modules 24Y, 24M, 24C, 24K, 24LC, and 24LM may be interpreted as being the 'inkjet head', or each module may be interpreted as being the 'inkjet head'. Alternatively, a configuration in which ink flow paths for the respective colors are separately formed in the interior of one inkjet head 24 and said one head comprises a nozzle array for discharging inks of a plurality of colors is also possible.

In each nozzle array 61, a plurality of nozzles are arranged at fixed intervals in one line (in a straight line) along the recording medium transport direction (the sub scanning direction, the X direction). In the inkjet head 24 of this example, for example, the arrangement pitch (nozzle pitch) of nozzles forming each nozzle array 61 is 254 µm (100 dpi), the number of nozzles forming one line nozzle array 61 is 256 nozzles, and the overall length Lw of the nozzle array 61 (nozzle array overall length) is about 65 mm (254 µm × 255 = 64.8 mm). Furthermore, the discharge frequency is 15 kHz, and the droplet quantity discharged can be adjusted to three levels, that is, 10 pL, 20 pL, and 30 pL, by changing the drive waveform.

As an ink discharge method for the inkjet head 24, a method (piezo jet method) in which ink droplets are fired by deformation of a piezoelectric element (piezo actuator) is employed. As a discharge energy-generating device, as well as a mode in which an electrostatic actuator is used (electrostatic actuator method), a mode in which a bubble is generated by heating an ink using a heating body (heating device) such as a heater and an ink droplet is fired by the pressure obtained (thermal jet method) may be employed. Since a UV-curable ink usually has high viscosity compared with a solvent ink, when a UV-curable ink is used it is preferable to employ the piezo jet method, which has a relatively large discharge force.

### -Drawing mode-

The inkjet recording equipment 10 shown in the present example employs drawing control by the multipass method and can change printing resolution by changing the number of printing passes. For example, three types of drawing modes, that is, high productivity mode, standard mode, and high image quality mode, are prepared, and the printing resolution is varied for each mode. The drawing mode can be selected according to the purpose of printing or the intended application.

In the high productivity mode, printing is carried out with a resolution of 600 dpi (main scanning direction) × 500 dpi (sub scanning direction). In the case of the high productivity mode, a resolution of 600 dpi × 500 dpi is obtained by 10 passes of the head.

In the standard mode, printing is carried out with a resolution of 900 dpi × 800 dpi, and the resolution of 900 dpi × 800 dpi is obtained by 16 passes of the head.

In the high image quality mode, printing is carried out with a resolution of 1,200 × 1,200 dpi, and the resolution of 1,200 dpi × 1,200 dpi is obtained by 24 passes of the head.

### -Configuration of UV irradiation section-

As shown in FIG. 5, the provisional curing light sources 32A and 32B are disposed on left and right sides of the inkjet head 24 in the carriage movement direction (Y direction). Furthermore, the main curing light sources 34A and 34B are disposed on the downstream side, in the recording medium transport direction (X direction), of the inkjet head 24. The main curing light sources 34A and 34B are disposed further outside (positioned further away) than the provisional curing light sources 32A and 32B in the Y direction from the inkjet head 24. The main curing light sources 34A and 34B are configured so that they can move in a direction (-X direction) opposite to the recording medium transport direction, and their positions can be changed so as to be aligned with the provisional curing light sources 32A and 32B and the inkjet head 24 along the carriage movement direction.

A color ink droplet that has been discharged from a nozzle (nozzle contained in the nozzle array 61Y, 61M, 61C, 61K, 61LC, or 61LM) for a colored ink composition (color ink) of the inkjet head 24 and has landed on the recording medium 12 is irradiated with UV for provisional curing by means of the provisional curing light source 32A (or 32B) that passes thereabove immediately thereafter.

Furthermore, an ink droplet on the recording medium 12 that has passed through the printing region of the inkjet head 24 accompanying intermittent transport of the recording medium 12 is irradiated by UV for main curing by means of the main curing light sources 34A and 34B. In this way, temporarily putting the ink droplet in a provisionally cured state enables the dot to have a spreading time (time for dot to spread to a predetermined size) while preventing interference between fired droplets, thus achieving a uniform height for dots and promoting interaction between the droplet and the medium to thus increase adhesion.

Similarly, a clear ink droplet that has been discharged from a nozzle (nozzle array CL) for a clear ink composition (clear ink) of the inkjet head 24 and has landed on the recording medium may be irradiated with UV for provisional curing by means of the provisional curing light source 32A (or 32B) that passes thereabove immediately thereafter.

Furthermore, an ink droplet on the recording medium 12 that has passed through the printing region of the inkjet head 24 accompanying intermittent transport of the recording medium is irradiated by UV for main curing by means of the main curing light sources 34A and 34B.

Furthermore, in the present embodiment, the configuration is preferably such that a white ink droplet that has been discharged from the nozzle for an optional white ink (a nozzle contained in the nozzle array 61 W) and has landed on the recording medium 12 is irradiated with UV for provisional curing.

The provisional curing light sources 32A and 32B may be switched on at the same time during printing by the inkjet head 24, but the lifespan of the light sources can be increased by switching on only the provisional curing light source that is to the rear with respect to movement of the carriage in the main scanning direction. Furthermore, the main curing light sources 34A and 34B are preferably switched on at the same time during printing by the inkjet recording equipment 10. In a drawing mode where the scanning speed is low, one thereof may be switched off, and the timing with which the provisional curing light sources 32A and 32B are made to start emitting light can be the same as or different from the timing with which the main curing light sources 34A and 34B are made to start emitting light.

### -Explanation of image formation process-

The inkjet recording equipment 10 shown in the present example is configured so that a multiple layer structure is formed by layering an image layer formed from a colored ink composition (Y, M, C, K, W, LC, LM, etc.) and projections formed from a clear ink composition. The amount of UV irradiation is controlled according to the order of layer formation and the UV absorption characteristics (ink curing characteristics) of the inks.

For example, since the white ink composition, which is an optional component, contains titanium oxide, zinc oxide, etc. as a pigment, the UV transmittance is poor compared with the other color ink compositions and the clear ink composition, and when the same amount of UV per unit volume as for the other color ink compositions or the clear ink composition is applied, the curing time is long. In order to eliminate any difference in curing characteristics caused by the UV transmission characteristics, irradiation with UV is controlled so that the amount of UV irradiation per unit time is larger for the white ink composition than for the other color ink compositions or the clear ink composition. A specific example of such image formation is described later.

From the viewpoint of UV transmission, the black ink composition is classified as an ink composition that requires a longer curing time, but since it is used for formation of an image layer and it is necessary to prevent interference between fired droplets by subjecting it to provisional curing immediately after firing droplets, it is classified as a color ink.

In accordance with experiment, the image layer and the projections are preferably irradiated with an amount of pinning light per unit area of 1 to 20 mJ/cm² immediately after firing, and more preferably 2 to 8 mJ/cm² immediately after firing.

Pinning light is applied once to multiple times by carriage scanning in order to prevent the ink droplet shape from collapsing due to coalescence or interference with another ink immediately after the droplet is fired or to prevent the droplet from moving. Curing light means exposure for completely curing the ink forming an image. Curing light is also applied multiple times by carriage scanning. The total amount of exposure reaches from 200 mJ/cm² up to 1,000 to 3,000 mJ/cm² as a result of one to multiple times of pinning exposure and multiple times of curing exposure. The trend for ink sensitivity is determined by the sensitivity with respect to irradiation wavelength and the content of the initiator and the sensitizer contained in the UV-curable ink; the ink is cured by radical polymerization or cationic polymerization, and preferably radical polymerization.

In the present embodiment, provisional curing light source irradiation regions are divided according to divided nozzle regions forming each layer such as the image layer and projections so that irradiation with an appropriate pinning light can be carried out according to the drawing regions of the divided nozzle regions, and the amount of light for each region (illumination intensity distribution) is adjusted. Details are described later.

The ink composition forming an image layer is preferably used as an ink set comprising a plurality of inkjet ink compositions.

In inkjet recording, the order in which colored ink compositions are discharged is not particularly limited, but it is preferable for them to be to applied onto a substrate from a colored ink composition having a high lightness; when yellow, cyan, magenta, and black are used, they are preferably applied on top of the recording medium in the order yellow → cyan → magenta → black. Furthermore, when white is additionally used, they are preferably applied in the order white → yellow → cyan → magenta → black. Furthermore, the present invention is not limited thereto, and an ink set comprising a total of seven colors, that is, yellow, light cyan, light magenta, cyan, magenta, black, and white ink compositions may also preferably be used, and in this case they are applied on top of the substrate in the order white → light cyan → light magenta → yellow → cyan → magenta → black.

### (In-mold molded article and process for producing same)

The process for producing an in-mold molded article of the present invention preferably comprises a step of placing the molded printed material of the present invention on an inner wall of a cavity formed by a plurality of molds, and a step of injecting a molten resin into the cavity via a gate.

Furthermore, the in-mold molded article of the present invention is an in-mold molded article obtained using the molded printed material of the present invention, and is preferably an in-mold molded article obtained by the production process.

In the present invention, the process for producing an in-mold molded article more preferably comprises (step 1) a step of placing a molded printed material on an inner wall of a cavity formed by a plurality of molds, and (step 2) a step of injecting a molten resin into the cavity via a gate.

Furthermore, in the present invention, an apparatus for carrying out molding and an apparatus for carrying out in-mold molding may be different or the same.

Examples of step (1) include a step in which a molded printed material is placed within a mold and sandwiched. Specifically, the molded printed material is fed into a mold for molding formed from a plurality of movable and fixed molds, preferably with the image layer on the inside. In this process, a plurality of sheets of molded printed material may be fed one by one, or a required portion of a long molded printed material may be fed intermittently.

In the case where molding and in-mold molding are carried out using the same apparatus, for example, when the sheet is placed within a mold, (i) it is placed by simply heating a mold and carrying out suction by evacuating the mold to give intimate contact, or (ii) it is placed by heating and softening from the image layer side using a heated platen, preliminarily molding the sheet so as to make it follow the shape of the interior of the mold, and carrying out mold clamping so that there is intimate contact with an inner face of the mold. The heating temperature in (ii) is preferably at least around the glass transition temperature of a substrate film but less than the melting temperature (or melting point), and it is more preferably a temperature around the glass transition temperature. Around the glass transition temperature means a range of on the order of ±5°C of the glass transition temperature, and is preferably on the order of 70°C to 130°C. In the case of (ii), for the purpose of putting the decorative sheet into intimate contact with the mold surface, when heating and softening the sheet using a heated platen, suction by evacuating may be carried out.

Step (2) is an injection step in which a molten resin is injected into the cavity (hollow part) and cooled and solidified to thus laminate and integrate a resin molding and the molded printed material. When the injection resin is a thermoplastic resin, it is put into a fluid state by heating and melting, and when the injection resin is a thermosetting resin, an uncured liquid composition is heated as appropriate and injected in a fluid state, and solidified by cooling. This enables the molded printed material to integrate with and stick to the resin molding thus formed, thereby giving an in-mold molded article. The heating temperature for the injection resin depends on the injection resin, but is preferably on the order of 180°C to 280°C.

### <Injection resin>

Any injection resin may be used in the in-mold molded article as long as it is a thermoplastic resin or thermosetting resin (including a two-component curable resin) that can be injection-molded, and various resins may be used. Examples of such thermoplastic resin materials include a polystyrene-based resin, a polyolefin-based resin, an ABS resin (including a heat-resistant ABS resin), an AS resin, an AN resin, a polyphenylene oxide-based resin, a polycarbonate-based resin, a polyacetal-based resin, an acrylic-based resin, a polyethylene terephthalate-based resin, a polybutylene terephthalate-based resin, a polysulfone-based resin, and a polyphenylene sulfide-based resin. Examples of the thermosetting resin include a two-component reaction-curing type polyurethane-based resin and an epoxy-based resin. These resins may be used singly or as a mixture of two or more types.

In addition to the above steps, it is preferable to have a step of removing from the mold a molding having the resin molding integrated with the molded printed material.

### (Decorative sheet)

The decorative sheet of the present invention comprises an image layer formed by curing a colored ink composition above one face of a substrate, and a textured pattern due to projections formed by curing a clear ink composition above the substrate and/or the image layer.

The decorative sheet of the present invention preferably has above said one face of the substrate at least a region where projections having a height of at least 30 µm formed by curing a clear ink composition are formed and a region where projections having a height of less than 30 µm formed by curing a clear ink composition are formed in a scattered manner.

Furthermore, a preferred mode of the decorative sheet of the present invention is the same as a preferred mode of the sheet used in the molding process of the present invention described above.

### Examples

The present invention is explained more specifically below by reference to Examples and Comparative Examples. The present invention is not limited by these Examples. In the description below, 'parts' denotes 'parts by mass' and '%' denotes 'mass%' unless otherwise specified.

Compounds used in the present Examples are listed below.

### <Pigments>

CINQUASIA MAGENTA RT-355D (magenta pigment, mixed crystal pigment of C.I. Pigment Violet 19 and C.I. Pigment Red 202, BASF Japan)
IRGALITTE BLUE GLVO (cyan pigment, C.I. Pigment Blue 15:4, BASF Japan) NOVOPERM YELLOW H2G (yellow pigment, C.I. Pigment Yellow 120, Clariant)
SPECIAL BLACK 250 (black pigment, C.I. Pigment Black 7, BASF Japan) Tipaque CR60-2 (white pigment, Ishihara Sangyo Kaisha Ltd.)

### <Dispersants>

BYKJET 9151 (pigment dispersing agent, BYK Chemie)
SOLSPERSE 32000 (pigment dispersing agent, The Lubrizol Corporation)
SOLSPERSE 41000 (pigment dispersing agent, The Lubrizol Corporation)
EFKA 7701 (pigment dispersing agent, BASF): acrylic block copolymer

### <Monomers/oligomers>

NVC (BASF): N-vinylcaprolactam
EOEOEA (product name SR256, Sartomer): ethoxyethoxyethyl acrylate
CTFA (product name SR531, Sartomer): cyclic trimethylolpropane formal acrylate
TBCHA (product name SR217, Sartomer): t-butylcyclohexyl acrylate
PEA (product name EBECRYL 114, Daicel-Cytec Company Ltd.): phenoxyethyl acrylate
CHA (Tokyo Chemical Industry Co., Ltd.): cyclohexyl acrylate
CD420 (Sartomer): isophoryl acrylate (3,3,5-trimethylcyclohexyl acrylate)
THFA (product name SR285, Sartomer): tetrahydrofurfuryl acrylate
IBOA (product name SR506, Sartomer): isobornyl acrylate
ODA (product name SR484): mixture of octyl acrylate and decyl acrylate

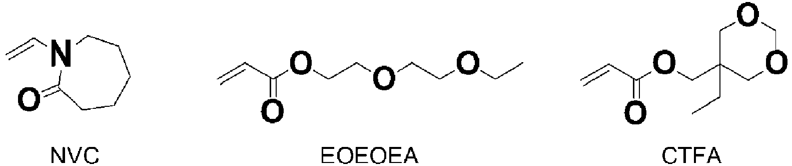

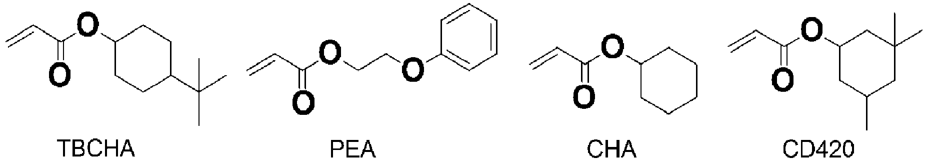

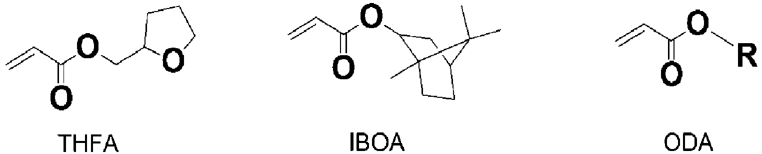

R denotes an alkyl group having 8 or 10 carbons.

### <Polyfunctional monomers>

Polyfunctional monomers used were as follows.
A1000 (Shin-Nakamura Chemical Co., Ltd.): polyethylene glycol #1000 diacrylate (molecular weight ≈1,108)
SR508 (Sartomer): dipropylene glycol diacrylate
SR341 (Sartomer): 1,3-pentanediol diacrylate
SR351 (Sartomer): trimethylolpropane triacrylate
SR833 (Sartomer): tricyclodecanedimethanol diacrylate
SR454 (Sartomer): ethoxylated (3) trimethylolpropane triacrylate
SR238 (Sartomer): 1,6-hexanediol diacrylate

Other polyfunctional polymerizable compounds used were as follows.
TEGO Rad 2010 (Evonik): polyfunctional polymerizable oligomer, silicone acrylate oligomer
TEGO Rad 2100 (Evonik): polyfunctional polymerizable oligomer, silicone acrylate oligomer
TEGO Rad 2700 (Evonik): polyfunctional polymerizable oligomer, silicone acrylate oligomer

### <Polymerization initiators>

DAROCUR TPO (BASF Japan): 2,4,6-trimethylbenzoyldiphenylphosphine oxide
Irg819 (IRGACURE 819, bisacylphosphine photopolymerization initiator, BASF Japan): bis(2,4,6-trimethylbenzoyl)phenylphosphine oxide
Irg184 (IRGACURE 184, BASF Japan): 1-hydroxycyclohexyl phenyl ketone Irg369 (IRGACURE 369184, BASF Japan): 2-benzyl-2-dimethylamino-1-(4-morpholinophenyl)-butane-1
Irg907 (IRGACURE 907184, BASF Japan): 2-methyl-1-(4-methylthiophenyl)-2-morpholinopropan-1-one
ITX (photopolymerization initiator, Shell Chemicals Japan): isopropylthioxanthone

### <Others>

BR113 (Mitsubishi Rayon Co., Ltd.): acrylic resin
OH-TEMPO (polymerization inhibitor): 4-hydroxy TEMPO (4-hydroxy-2,2,6,6-tetramethylpiperidin-1-oxyl)
UV-12 (polymerization inhibitor, Kroma Chem): tris(N-nitroso-N-phenylhydroxyamine) aluminum salt)

### (Preparation of mill base)

### <Preparation of cyan mill base M>

C pigment (cyan pigment): IRGALITE BLUE GLVO (BASF Japan): 30 parts by mass
PEA: 60 parts by mass
Solsperse 32000: 10 parts by mass

The above components were stirred to give a cyan mill base C. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

### <Preparation of magenta mill base M>

M pigment (magenta pigment): CINQUASIA MAGENTA RT-355D (BASF Japan): 30 parts by mass
PEA: 60 parts by mass
Solsperse 32000: 10 parts by mass

The above components were stirred to give a magenta mill base M. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

### <Preparation of yellow mill base Y>

Y pigment (yellow pigment): NOVOPERM YELLOW H2G (Clariant): 30 parts by mass
PEA: 60 parts by mass
Solsperse 32000: 10 parts by mass

The above components were stirred to give a yellow mill base Y. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

### <Preparation of black mill base K>

K pigment (black pigment) Mogul E (Cabot): 30 parts by mass
PEA: 60 parts by mass
EFKA7731: 10 parts by mass

The above components were stirred to give a black mill base K. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

### <Preparation of white mill base W>

W pigment (white pigment): KRONOS 2300 (white pigment, KRONOS): 45 parts by mass
PEA: 50 parts by mass
Solsperse 41000: 5 parts by mass

The above components were stirred to give a white mill base W. Preparation of a pigment mill base was carried out by putting it into an M50 disperser motor mill (Eiger Machinery, Inc.) and dispersing using zirconia beads having a diameter of 0.65 mm at a peripheral speed of 9 m/s for 8 hours.

### <Preparation of ink composition>

Components described in the Table below were stirred using a mixer (Silverson L4R) at 2,500 rpm for 15 minutes. Subsequently, filtration was carried out using a cartridge filter (product name: Profile II AB01A01014J) manufactured by Pall Corporation, thus giving ink compositions of each color.

### (Inkjet image recording method)

Recording was carried out on a recording medium using an Acuity LED1600 inkjet recording system having piezo type inkjet nozzles. The ink supply system comprised a main tank, a supply pipe, an ink supply tank immediately before an inkjet head, a filter, and a piezo type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo type inkjet head was driven so as to discharge multisize dots of 1 to 60 pL at resolutions of 1,200 × 1,200 dpi, 900 × 800 dpi, and 600 × 500 dpi. Here, the dpi referred to in the present invention denotes the number of dots per 2.54 cm. As the recording medium, a polycarbonate substrate (product name: Panlite PC-1151, Teijin Chemicals Ltd., thickness 400 µm) was used.

The number of passes of the head when an image was formed with the above resolutions were as follows.
1,200 × 1,200 dpi: 24 passes
900 × 800 dpi: 16 passes
600 × 500 dpi: 10 passes

The number of nozzles used when the head passed depended on the image formation mode.

When an image with only one layer, of YMCK colors, was formed, 256 nozzles were used for YMCK,
when an image with two layers, of YMCK colors and W, was formed by one pass, 128 nozzles of the 256 nozzles were used for YMCK and 128 nozzles of the 256 nozzles were used for W,
when an image with two layers, of YMCK colors and CL, was formed by one pass, 128 to 255 nozzles of the 256 nozzles were used for YMCK and 128 to 1 nozzles of the 256 nozzles were used for CL, and
when an image with three layers, of YMCK colors, W, and CL, was formed by one pass, 85 to 127 nozzles of the 256 nozzles were used for YMCK, 85 to 127 nozzles of the 256 nozzles were used for W, and 85 to 1 nozzles of the 256 nozzles were used for CL.

When discharging the clear ink, the nozzles used could be freely changed, and the number of nozzles used for discharge had no influence on the image film quality formed.

### (Evaluation methods)

### <Method for forming image for evaluation>

In accordance with the inkjet recording method, half (A5 size) of an A4 size polycarbonate substrate was used for forming a clear layer producing asperities, and the remaining half (A5 size) was used for forming a clear layer producing no asperities.

A color solid image and a clear image with a clear halftone dot pattern were printed on each position under the conditions below, and evaluation was carried out.

### <Sticking to mold>

In accordance with the inkjet recording method, a transparent substrate (the polycarbonate substrate) was used as a resin sheet, in the Examples and Comparative Examples a solid image was printed with the inks and a clear layer was formed as described above, and molding was carried out using a vacuum forming machine (CUVF-1216-PWB, Fu-se Vacuum Forming). Molding conditions were mold temperatures of 80°C and 130°C (sticking was stronger for 130°C than for 80°C) and a substrate temperature of 150°C, the mold being made of aluminum and having a shape similar to one formed by halving a 500 mL PET bottle from the cap side toward the bottom.

The evaluation criteria for mold sticking were as follows.
5: no sound of sticking or transfer for either a mold temperature of 80°C or of 130°C.
4: no sound of sticking or transfer for a mold temperature of 80°C, but there was sound of sticking for a mold temperature of 130°C.
3: sound of sticking for both a mold temperature of 80°C and of 130°C, but no transfer to mold.
2: sound of sticking and transfer to mold.
1: image stuck to mold and could not be detached, or irregularities were formed on molded product and evaluation was impossible.

An evaluation of 5 was the best, and an evaluation of 3 or greater was a range that gave no problems in practice.

### <Ease of forming asperities>

A molded product produced in the 'sticking to mold' test was used, the height of asperities from the substrate side was measured using a profile measurement laser microscope VK9700 (Keyence Corporation), and evaluation was carried out visually for general features.

Evaluation criteria for ease of forming asperities were as follows.
3: height of at least 45 µm (glossy asperities were formed)
2: height of at least 30 µm (embossed-form asperities were formed)
1 : height of less than 30 µm (molded printed material having no textured feel)

An evaluation of 3 was the best, and an evaluation of 2 or greater was acceptable as being visible and there being no problems in practice.

### <Measurement of thermal stretching ratio (stretchability)>

Drawing of solid images having an average film thickness of 30 µm and formation of a clear layer were carried out on a transparent substrate (the polycarbonate substrate) as a resin sheet using the ink compositions prepared in the Examples and Comparative Examples in accordance with the inkjet recording method, and the ink images were cut to a size of 5 cm × 2 cm and subjected to measurement of stretching ratio by pulling using the stretching machine and temperature conditions below.
Equipment used: Tensilon (Shimadzu Corporation)
Conditions: temperature 180°C, pulling speed 50 millimeter/min. Length at break was measured and the stretching ratio was calculated. The stretching ratio was determined from {(length at break - length before stretching)/length before stretching} × 100. For example, when there was break at 10 cm, the stretching ratio was {(10 cm - 5 cm)/5 cm} × 100 = 100%.

The evaluation criteria for thermal stretchability were as follows.
5: stretching ratio of at least 150%
4: stretching ratio of at least 100% but less than 150%
3: stretching ratio of at least 50% but less than 100%
2: stretching ratio of at least 30% but less than 50%
1 : stretching ratio of less than 30%

An evaluation of 5 was the best, and an evaluation of 3 or greater was a level that gave no problems in practice.

Clear layers were formed on an image layer formed with 1 to 5 colors by changing the area ratio and the mass ratio of the clear layer relative to the image layer, and evaluation was carried out. In Table 15 to Table 19, Y being '1' and CL being '7' means that yellow ink No. 1 and clear ink No. 7 were used.

The mass ratio of the clear layer was determined by preparing a 100 cm² polycarbonate substrate, measuring the mass of the substrate, producing a 100 cm² solid image using 4-color black and white (Y + M + C + K + W), then measuring the total mass of the substrate and the image, further producing a clear image, then measuring the total mass of the substrate and the image, calculating the mass of each, and deriving the mass ratio.

The printer used was an Acuity LED1600 (Fujifilm Corporation), and the mass of the clear ink composition was adjusted by means of the clear image density.

The weight was proportional to the image density as shown in the table below. The image density of the clear ink composition was calculated on the basis of it being 100 when a 100% solid image was drawn in 900 × 800 dpi mode.

**(Table 2)**

| Clear Ink image density | 10 | 20 | 40 | 100 | 200 | 400 |
|---|---|---|---|---|---|---|
| X/Y [ratio %] | 5 | 10 | 20 | 50 | 100 | 200 |

The value for 'CI/(Y + M + C + K + W) for asperities' in the table means the ratio by mass of clear ink (X) of projections having a height of at least 30 µm relative to the mass (Y) of the image layer (Y + M + C + K + W), and is expressed as X/Y.

The value for 'CI/(Y + M + C + K + W) for sticking' in the table means the ratio by mass of clear ink (X') of projections having a height of less than 30 µm relative to the mass (Y) of the image layer, and is expressed as X'/Y.

**(Table 3)**

| Yellow ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Yellow mill base | | 10 | 10 | 10 | 10 | 10 | 10 | 10 | 10 | 10 | 10 | 10 | 10 | 10 | 10 |
| Monofunctional monomer | NVC | - | - | - | - | - | 20 | 20 | 20 | 20 | 20 | 20 | 20 | 20 | 20 |
| | IBOA | 1.9 | 6.9 | 30.9 | 41.9 | 46.9 | 26.9 | - | - | - | - | - | - | - | - |
| | PEA | 29.5 | 29.5 | 29.5 | 29.5 | 29.5 | 29.5 | 56.4 | - | - | - | - | - | - | 26.4 |
| | CTFA | - | - | - | - | - | - | - | 56.4 | - | - | - | - | - | - |
| | EOEOEA | - | - | - | - | - | - | - | - | 56.4 | - | - | - | - | - |
| | TBCHA | - | - | - | - | - | - | - | - | - | 56.4 | - | - | - | 30 |
| | CD420 | - | - | - | - | - | - | - | - | - | - | 56.4 | - | - | - |
| | CHA | - | - | - | - | - | - | - | - | - | - | - | 56.4 | - | - |
| | THFA | - | - | - | - | - | - | - | - | - | - | - | - | 56.4 | - |
| Polyfunctional oligomer | Tegorad 2010 | - | - | - | - | - | - | - | - | - | - | - | - | - | - |
| | Tegorad 2100 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Tegorad 2700 | - | - | - | - | - | - | - | - | - | - | - | - | - | - |
| Polyfunctional monomer | SR508 | 5 | - | - | - | - | - | - | - | - | - | - | - | - | - |
| | A1000 | 40 | 40 | 16 | 5 | - | - | - | - | - | - | - | - | - | - |
| Resin | BR113 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 | 5 | 5 | 5 | 5 |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 |
| | EFKA7701 | - | - | - | - | - | - | - | - | - | - | - | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 29 | 29 | 29 | 29 | 29 | 29 | 29 | 29 | 29 | 29 | 29 | 29 | 29 | 29 |
| Polyfunctional proportion (mass%) | | 54.7 | 48.6 | 19.5 | 6.2 | 0.1 | 0.1 | 0.1 | 0.1 | 0.1 | 0.1 | 0.1 | 0.1 | 0.1 | 0.1 |
| Monofunctional proportion (mass%) | | 45.3 | 51.4 | 80.5 | 93.8 | 99.9 | 99.9 | 99.9 | 99.9 | 99.9 | 99.9 | 99.9 | 99.9 | 99.9 | 99.9 |

**(Table 4)**

| Yellow ink No. | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Yellow mill base | | 10 | 10 | 10 | 10 | 10 | 10 | 10 | 10 | 10 | 10 | 10 | 10 | 10 | 10 |
| Monofunctional monomer | NVC | 20 | 20 | 20 | 20 | 20 | 20 | 20 | 20 | 20 | 20 | 20 | 20 | 20 | 20 |
| | IBOA | - | - | - | - | - | - | - | - | - | - | - | - | - | - |
| | PEA | 26.4 | 26.4 | 26.4 | 26.4 | 26.4 | 26.4 | 26.4 | 26.4 | 26.4 | 26.4 | 26.4 | 26.4 | 26.4 | 26.4 |
| | CTFA | - | - | - | - | - | - | - | - | - | - | - | - | - | - |
| | EOEOEA | - | - | - | - | - | - | - | - | - | - | - | - | - | - |
| | TBCHA | 30 | 30 | 30 | 30 | 30 | 33 | 30 | 33 | 30 | 29 | 30 | 30 | 30.1 | 30 |
| | CD420 | - | - | - | - | - | - | - | - | - | - | - | - | - | - |
| | CHA | - | - | - | - | - | - | - | - | - | - | - | - | - | - |
| | THFA | - | - | - | - | - | - | - | - | - | - | - | - | - | - |
| Polyfunctional oligomer | Tegorad 2010 | 0.1 | - | - | - | - | - | - | - | - | - | - | - | - | - |
| | Tegorad 2100 | - | - | - | - | 0.1 | 0.1 | 0.1 | 0.1 | 0.1 | 0.1 | 0.1 | 0.1 | 0.1 | 1.1 |
| | Tegorad 2700 | - | 0.1 | - | - | - | - | - | - | - | - | - | - | - | - |
| Polyfunctional monomer | SR508 | - | - | 0.1 | - | - | - | - | - | - | - | - | - | - | - |
| | A1000 | - | - | - | 0.1 | - | - | - | - | - | - | - | - | - | - |
| Resin | BR113 | 1 | 1 | 1 | 1 | 1 | 1 | 1 | 1 | 1 | 1 | 1 | 1 | 1 | - |
| Polymerization initiator | TPO | 5 | 5 | 5 | 5 | 10 | - | 5 | - | - | 7 | 5 | 5 | 5 | 5 |
| | Irgacure 819 | 5 | 5 | 5 | 5 | - | 7 | - | - | - | 5 | 5 | 5 | 5 | 5 |
| | Irgacure 184 | - | - | - | - | - | - | 5 | - | - | - | - | - | - | - |
| | Irgacure 369 | - | - | - | - | - | - | - | 7 | - | - | - | - | - | - |
| | Irgacure 907 | - | - | - | - | - | - | - | - | 10 | - | - | - | - | - |
| | ITX | 1 | 1 | 1 | 1 | 1 | 1 | 1 | 1 | 1 | - | 1 | 1 | 1 | 1 |
| Dispersant | BYK JET9151 | 1 | 1 | 1 | 1 | 1 | 1 | 1 | 1 | 1 | 1 | - | 1 | 1 | 1 |
| | EFKA7701 | - | - | - | - | - | - | - | - | - | - | 1 | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | - | 0.4 | 0.3 |
| | UV-12 | 0.2 | 0.2 | 0.2 | 0.2 | 0.2 | 0.2 | 0.2 | 0.2 | 0.2 | 0.2 | 0.2 | 0.5 | - | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 23.1 | 22.7 | 29 | 29 | 29 | 29 | 29 | 29 | 29 | 29 | 29 | 29 | 29 | 29 |
| Polyfunctional proportion (mass%) | | 0.1 | 0.1 | 0.1 | 0.1 | 0.1 | 0.1 | 0.1 | 0.1 | 0.1 | 0.1 | 0.1 | 0.1 | 0.1 | 1.3 |
| Monofunctional proportion (mass%) | | 99.9 | 99.9 | 99.9 | 99.9 | 99.9 | 99.9 | 99.9 | 99.9 | 99.9 | 99.9 | 99.9 | 99.9 | 99.9 | 98.7 |

**(Table 5)**

| Magenta ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Magenta mill base | | 15 | 15 | 15 | 15 | 15 | 15 | 15 | 15 | 15 | 15 | 15 | 15 | 15 | 15 |
| Monofunctional monomer | NVC | - | - | - | - | - | 20 | 20 | 20 | 20 | 20 | 20 | 20 | 20 | 20 |
| | IBOA | 1.9 | 6.9 | 30.9 | 41.9 | 46.9 | 26.9 | - | - | - | - | - | - | - | - |
| | PEA | 24.5 | 24.5 | 24.5 | 24.5 | 24.5 | 24.5 | 51.4 | - | - | - | - | - | - | 26.4 |
| | CTFA | - | - | - | - | - | - | - | 51.4 | - | - | - | - | - | - |
| | EOEOEA | - | - | - | - | - | - | - | - | 51.4 | - | - | - | - | - |
| | TBCHA | - | - | - | - | - | - | - | - | - | 51.4 | - | - | - | 25 |
| | CD420 | - | - | - | - | - | - | - | - | - | - | 51.4 | - | - | - |
| | CHA | - | - | - | - | - | - | - | - | - | - | - | 51.4 | - | - |
| | THFA | - | - | - | - | - | - | - | - | - | - | - | - | 51.4 | - |
| Polyfunctional oligomer | Tegorad 2010 | - | - | - | - | - | - | - | - | - | - | - | - | - | - |
| | Tegorad 2100 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Tegorad 2700 | - | - | - | - | - | - | - | - | - | - | - | - | - | - |
| Polyfunctional monomer | SR508 | 5 | - | - | - | - | - | - | - | - | - | - | - | - | - |
| | A1000 | 40 | 40 | 16 | 5 | - | - | - | - | - | - | - | - | - | - |
| Resin | BR113 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 | 5 | 5 | 5 | 5 |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 |
| | EFKA 7701 | - | - | - | - | - | - | - | - | - | - | - | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 29 | 29 | 29 | 29 | 29 | 29 | 29 | 29 | 29 | 29 | 29 | 29 | 29 | 29 |
| Polyfunctional proportion (mass%) | | 56.0 | 49.8 | 20.0 | 6.3 | 0.1 | 0.1 | 0.1 | 0.1 | 0.1 | 0.1 | 0.1 | 0.1 | 0.1 | 0.1 |
| Monofunctional proportion (mass%) | | 44.0 | 50.2 | 80.0 | 93.7 | 99.9 | 99.9 | 99.9 | 99.9 | 99.9 | 99.9 | 99.9 | 99.9 | 99.9 | 99.9 |

**(Table 6)**

| Magenta ink No. | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Magenta mill base | | 15 | 15 | 15 | 15 | 15 | 15 | 15 | 15 | 15 | 15 | 15 | 15 | 15 | 15 |
| Monofunctional monomer | NVC | 20 | 20 | 20 | 20 | 20 | 20 | 20 | 20 | 20 | 20 | 20 | 20 | 20 | 20 |
| | IBOA | - | - | - | - | - | - | - | - | - | - | - | - | - | - |
| | PEA | 26.4 | 26.4 | 26.4 | 26.4 | 26.4 | 26.4 | 26.4 | 26.4 | 26.4 | 26.4 | 26.4 | 26.4 | 26.4 | 26.4 |
| | CTFA | - | - | - | - | - | - | - | - | - | - | - | - | - | - |
| | EOEOEA | - | - | - | - | - | - | - | - | - | - | - | - | - | - |
| | TBCHA | 25 | 25 | 25 | 25 | 25 | 28 | 25 | 28 | 25 | 24 | 25 | 25 | 25.1 | 25 |
| | CD420 | - | - | - | - | - | - | - | - | - | - | - | - | - | - |
| | CHA | - | - | - | - | - | - | - | - | - | - | - | - | - | - |
| | THFA | - | - | - | - | - | - | - | - | - | - | - | - | - | - |
| Polyfunctional oligomer | Tegorad 2010 | 0.1 | - | - | - | - | - | - | - | - | - | - | - | - | - |
| | Tegorad 2100 | - | - | - | - | 0.1 | 0.1 | 0.1 | 0.1 | 0.1 | 0.1 | 0.1 | 0.1 | 0.1 | 1.1 |
| | Tegorad 2700 | - | 0.1 | - | - | - | - | - | - | - | - | - | - | - | - |
| Polyfunctional monomer | SR508 | - | - | 0.1 | - | - | - | - | - | - | - | - | - | - | - |
| | A1000 | - | - | - | 0.1 | - | - | - | - | - | - | - | - | - | - |
| Resin | BR113 | 1 | 1 | 1 | 1 | 1 | 1 | 1 | 1 | 1 | 1 | 1 | 1 | 1 | - |
| Polymerization initiator | TPO | 5 | 5 | 5 | 5 | 10 | - | 5 | - | - | 7 | 5 | 5 | 5 | 5 |
| | Irgacure 819 | 5 | 5 | 5 | 5 | - | 7 | - | - | - | 5 | 5 | 5 | 5 | 5 |
| | Irgacure 184 | - | - | - | - | - | - | 5 | - | - | - | - | - | - | - |
| | Irgacure 369 | - | - | - | - | - | - | - | 7 | - | - | - | - | - | - |
| | Irgacure 907 | - | - | - | - | - | - | - | - | 10 | - | - | - | - | - |
| | ITX | 1 | 1 | 1 | 1 | 1 | 1 | 1 | 1 | 1 | - | 1 | 1 | 1 | 1 |
| Dispersant | BYK JET9151 | 1 | 1 | 1 | 1 | 1 | 1 | 1 | 1 | 1 | 1 | - | 1 | 1 | 1 |
| | EFKA 7701 | - | - | - | - | - | - | - | - | - | - | 1 | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | - | 0.4 | 0.3 |
| | UV-12 | 0.2 | 0.2 | 0.2 | 0.2 | 0.2 | 0.2 | 0.2 | 0.2 | 0.2 | 0.2 | 0.2 | 0.5 | - | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 23.1 | 22.7 | 29 | 29 | 29 | 29 | 29 | 29 | 29 | 29 | 29 | 29 | 29 | 29 |
| Polyfunctional proportion (mass%) | | 0.1 | 0.1 | 0.1 | 0.1 | 0.1 | 0.1 | 0.1 | 0.1 | 0.1 | 0.1 | 0.1 | 0.1 | 0.1 | 1.3 |
| Monofunctional proportion (mass%) | | 99.9 | 99.9 | 99.9 | 99.9 | 99.9 | 99.9 | 99.9 | 99.9 | 99.9 | 99.9 | 99.9 | 99.9 | 99.9 | 98.7 |

**(Table 7)**

| Cyan ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Cyan mill base | | 10 | 10 | 10 | 10 | 10 | 10 | 10 | 10 | 10 | 10 | 10 | 10 | 10 | 10 |
| Monofunctional monomer | NVC | - | - | - | - | - | 20 | 20 | 20 | 20 | 20 | 20 | 20 | 20 | 20 |
| | IBOA | 1.9 | 6.9 | 30.9 | 41.9 | 46.9 | 26.9 | - | - | - | - | - | - | - | - |
| | PEA | 29.5 | 29.5 | 29.5 | 29.5 | 29.5 | 29.5 | 56.4 | - | - | - | - | - | - | 26.4 |
| | CTFA | - | - | - | - | - | - | - | 56.4 | - | - | - | - | - | - |
| | EOEOEA | - | - | - | - | - | - | - | - | 56.4 | - | - | - | - | - |
| | TBCHA | - | - | - | - | - | - | - | - | - | 56.4 | - | - | - | 30 |
| | CD420 | - | - | - | - | - | - | - | - | - | - | 56.4 | - | - | - |
| | CHA | - | - | - | - | - | - | - | - | - | - | - | 56.4 | - | - |
| | THFA | - | - | - | - | - | - | - | - | - | - | - | - | 56.4 | - |
| Polyfunctional oligomer | Tegorad 2010 | - | - | - | - | - | - | - | - | - | - | - | - | - | - |
| | Tegorad 2100 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Tegorad 2700 | - | - | - | - | - | - | - | - | - | - | - | - | - | - |
| Polyfunctional monomer | SR508 | 5 | - | - | - | - | - | - | - | - | - | - | - | - | - |
| | A1000 | 40 | 40 | 16 | 5 | - | - | - | - | - | - | - | - | - | - |
| Resin | BR113 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 | 5 | 5 | 5 | 5 |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 |
| | EFKA 7701 | - | - | - | - | - | - | - | - | - | - | - | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 29 | 29 | 29 | 29 | 29 | 29 | 29 | 29 | 29 | 29 | 29 | 29 | 29 | 29 |
| Polyfunctional proportion (mass%) | | 54.7 | 48.6 | 19.5 | 6.2 | 0.1 | 0.1 | 0.1 | 0.1 | 0.1 | 0.1 | 0.1 | 0.1 | 0.1 | 0.1 |
| Monofunctional proportion (mass%) | | 45.3 | 51.4 | 80.5 | 93.8 | 99.9 | 99.9 | 99.9 | 99.9 | 99.9 | 99.9 | 99.9 | 99.9 | 99.9 | 99.9 |

**(Table 8)**

| Cyan ink No. | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Cyan mill base | | 10 | 10 | 10 | 10 | 10 | 10 | 10 | 10 | 10 | 10 | 10 | 10 | 10 | 10 |
| Monofunctional monomer | NVC | 20 | 20 | 20 | 20 | 20 | 20 | 20 | 20 | 20 | 20 | 20 | 20 | 20 | 20 |
| | IBOA | - | - | - | - | - | - | - | - | - | - | - | - | - | - |
| | PEA | 26.4 | 26.4 | 26.4 | 26.4 | 26.4 | 26.4 | 26.4 | 26.4 | 26.4 | 26.4 | 26.4 | 26.4 | 26.4 | 26.4 |
| | CTFA | - | - | - | - | - | - | - | - | - | - | - | - | - | - |
| | EOEOEA | - | - | - | - | - | - | - | - | - | - | - | - | - | - |
| | TBCHA | 30 | 30 | 30 | 30 | 30 | 33 | 30 | 33 | 30 | 29 | 30 | 30 | 30.1 | 30 |
| | CD420 | - | - | - | - | - | - | - | - | - | - | - | - | - | - |
| | CHA | - | - | - | - | - | - | - | - | - | - | - | - | - | - |
| | THFA | - | - | - | - | - | - | - | - | - | - | - | - | - | - |
| Polyfunctional oligomer | Tegorad 2010 | 0.1 | - | - | - | - | - | - | - | - | - | - | - | - | - |
| | Tegorad 2100 | - | - | - | - | 0.1 | 0.1 | 0.1 | 0.1 | 0.1 | 0.1 | 0.1 | 0.1 | 0.1 | 1.1 |
| | Tegorad 2700 | - | 0.1 | - | - | - | - | - | - | - | - | - | - | - | - |
| Polyfunctional monomer | SR508 | - | - | 0.1 | - | - | - | - | - | - | - | - | - | - | - |
| | A1000 | - | - | - | 0.1 | - | - | - | - | - | - | - | - | - | - |
| Resin | BR113 | 1 | 1 | 1 | 1 | 1 | 1 | 1 | 1 | 1 | 1 | 1 | 1 | 1 | - |
| Polymerization initiator | TPO | 5 | 5 | 5 | 5 | 10 | - | 5 | - | - | 7 | 5 | 5 | 5 | 5 |
| | Irgacure 819 | 5 | 5 | 5 | 5 | - | 7 | - | - | - | 5 | 5 | 5 | 5 | 5 |
| | Irgacure 184 | - | - | - | - | - | - | 5 | - | - | - | - | - | - | - |
| | Irgacure 369 | - | - | - | - | - | - | - | 7 | - | - | - | - | - | - |
| | Irgacure 907 | - | - | - | - | - | - | - | - | 10 | - | - | - | - | - |
| | ITX | 1 | 1 | 1 | 1 | 1 | 1 | 1 | 1 | 1 | - | 1 | 1 | 1 | 1 |
| Dispersant | BYK JET9151 | 1 | 1 | 1 | 1 | 1 | 1 | 1 | 1 | 1 | 1 | - | 1 | 1 | 1 |
| | EFKA 7701 | - | - | - | - | - | - | - | - | - | - | 1 | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | - | 0.4 | 0.3 |
| | UV-12 | 0.2 | 0.2 | 0.2 | 0.2 | 0.2 | 0.2 | 0.2 | 0.2 | 0.2 | 0.2 | 0.2 | 0.5 | - | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 23.1 | 22.7 | 29 | 29 | 29 | 29 | 29 | 29 | 29 | 29 | 29 | 29 | 29 | 29 |
| Polyfunctional proportion (mass%) | | 0.1 | 0.1 | 0.1 | 0.1 | 0.1 | 0.1 | 0.1 | 0.1 | 0.1 | 0.1 | 0.1 | 0.1 | 0.1 | 1.3 |
| Monofunctional proportion (mass%) | | 99.9 | 99.9 | 99.9 | 99.9 | 99.9 | 99.9 | 99.9 | 99.9 | 99.9 | 99.9 | 99.9 | 99.9 | 99.9 | 98.7 |

**(Table 9)**

| Black ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Black mill base | | 10 | 10 | 10 | 10 | 10 | 10 | 10 | 10 | 10 | 10 | 10 | 10 | 10 | 10 |
| Monofunctional monomer | NVC | - | - | - | - | - | 20 | 20 | 20 | 20 | 20 | 20 | 20 | 20 | 20 |
| | IBOA | 1.9 | 6.9 | 30.9 | 41.9 | 46.9 | 26.9 | - | - | - | - | - | - | - | - |
| | PEA | 29.5 | 29.5 | 29.5 | 29.5 | 29.5 | 29.5 | 56.4 | - | - | - | - | - | - | 26.4 |
| | CTFA | - | - | - | - | - | - | - | 56.4 | - | - | - | - | - | - |
| | EOEOEA | - | - | - | - | - | - | - | - | 56.4 | - | - | - | - | - |
| | TBCHA | - | - | - | - | - | - | - | - | - | 56.4 | - | - | - | 30 |
| | CD420 | - | - | - | - | - | - | - | - | - | - | 56.4 | - | - | - |
| | CHA | - | - | - | - | - | - | - | - | - | - | - | 56.4 | - | - |
| | THFA | - | - | - | - | - | - | - | - | - | - | - | - | 56.4 | - |
| Polyfunctional oligomer | Tegorad 2010 | - | - | - | - | - | - | - | - | - | - | - | - | - | - |
| | Tegorad 2100 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Tegorad 2700 | - | - | - | - | - | - | - | - | - | - | - | - | - | - |
| Polyfunctional monomer | SR508 | 5 | - | - | - | - | - | - | - | - | - | - | - | - | - |
| | A1000 | 40 | 40 | 16 | 5 | - | - | - | - | - | - | - | - | - | - |
| Resin | BR113 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 | 5 | 5 | 5 | 5 |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | 1 | 1 | 1 | 1 | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 | 1 | 1 | 1 | 1 |
| | EFKA 7701 | - | - | - | - | - | - | - | - | - | - | - | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 29 | 29 | 29 | 29 | 29 | 29 | 29 | 29 | 29 | 29 | 29 | 29 | 29 | 29 |
| Polyfunctional proportion (mass%) | | 54.7 | 48.6 | 19.5 | 6.2 | 0.1 | 0.1 | 0.1 | 0.1 | 0.1 | 0.1 | 0.1 | 0.1 | 0.1 | 0.1 |
| Monofunctional proportion (mass%) | | 45.3 | 51.4 | 80.5 | 93.8 | 99.9 | 99.9 | 99.9 | 99.9 | 99.9 | 99.9 | 99.9 | 99.9 | 99.9 | 99.9 |

**(Table 10)**

| Black ink No. | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| Black mill base | | 10 | 10 | 10 | 10 | 10 | 10 | 10 | 10 | 10 | 10 | 10 | 10 | 10 | 10 |
| Monofunctional monomer | NVC | 20 | 20 | 20 | 20 | 20 | 20 | 20 | 20 | 20 | 20 | 20 | 20 | 20 | 20 |
| | IBOA | - | - | - | - | - | - | - | - | - | - | - | - | - | - |
| | PEA | 26.4 | 26.4 | 26.4 | 26.4 | 26.4 | 26.4 | 26.4 | 26.4 | 26.4 | 26.4 | 26.4 | 26.4 | 26.4 | 26.4 |
| | CTFA | - | - | - | - | - | - | - | - | - | - | - | - | - | - |
| | EOEOEA | - | - | - | - | - | - | - | - | - | - | - | - | - | - |
| | TBCHA | 30 | 30 | 30 | 30 | 30 | 33 | 30 | 33 | 30 | 29 | 30 | 30 | 30.1 | 30 |
| | CD420 | - | - | - | - | - | - | - | - | - | - | - | - | - | - |
| | CHA | - | - | - | - | - | - | - | - | - | - | - | - | - | - |
| | THFA | - | - | - | - | - | - | - | - | - | - | - | - | - | - |
| Polyfunctional oligomer | Tegorad 2010 | 0.1 | - | - | - | - | - | - | - | - | - | - | - | - | - |
| | Tegorad 2100 | - | - | - | - | 0.1 | 0.1 | 0.1 | 0.1 | 0.1 | 0.1 | 0.1 | 0.1 | 0.1 | 1.1 |
| | Tegorad 2700 | - | 0.1 | - | - | - | - | - | - | - | - | - | - | - | - |
| Polyfunctional monomer | SR508 | - | - | 0.1 | - | - | - | - | - | - | - | - | - | - | - |
| | A1000 | - | - | - | 0.1 | - | - | - | - | - | - | - | - | - | - |
| Resin | BR113 | 1 | 1 | 1 | 1 | 1 | 1 | 1 | 1 | 1 | 1 | 1 | 1 | 1 | - |
| Polymerization initiator | TPO | 5 | 5 | 5 | 5 | 10 | - | 5 | - | - | 7 | 5 | 5 | 5 | 5 |
| | Irgacure 819 | 5 | 5 | 5 | 5 | - | 7 | - | - | - | 5 | 5 | 5 | 5 | 5 |
| | Irgacure 184 | - | - | - | - | - | - | 5 | - | - | - | - | - | - | - |
| | Irgacure 369 | - | - | - | - | - | - | - | 7 | - | - | - | - | - | - |
| | Irgacure 907 | - | - | - | - | - | - | - | - | 10 | - | - | - | - | - |
| | ITX | 1 | 1 | 1 | 1 | 1 | 1 | 1 | 1 | 1 | - | 1 | 1 | 1 | 1 |
| Dispersant | BYK JET9151 | 1 | 1 | 1 | 1 | 1 | 1 | 1 | 1 | 1 | 1 | - | 1 | 1 | 1 |
| | EFKA 7701 | - | - | - | - | - | - | - | - | - | - | 1 | - | - | - |
| Polymerization inhibitor | OH-TEMPO | 0.3 | 0.3 | 0.3 | 0.3 | 0.3 | 0.3 | 0.3 | 0.3 | 0.3 | 0.3 | 0.3 | - | 0.4 | 0.3 |
| | UV-12 | 0.2 | 0.2 | 0.2 | 0.2 | 0.2 | 0.2 | 0.2 | 0.2 | 0.2 | 0.2 | 0.2 | 0.5 | - | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 23.1 | 22.7 | 29 | 29 | 29 | 29 | 29 | 29 | 29 | 29 | 29 | 29 | 29 | 29 |
| Polyfunctional proportion (mass%) | | 0.1 | 0.1 | 0.1 | 0.1 | 0.1 | 0.1 | 0.1 | 0.1 | 0.1 | 0.1 | 0.1 | 0.1 | 0.1 | 1.3 |
| Monofunctional proportion (mass%) | | 99.9 | 99.9 | 99.9 | 99.9 | 99.9 | 99.9 | 99.9 | 99.9 | 99.9 | 99.9 | 99.9 | 99.9 | 99.9 | 98.7 |

**(Table 11)**

| White ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| White mill base | | 30 | 30 | 30 | 30 | 30 | 30 | 30 | 30 | 30 | 30 | 30 | 30 | 30 | 30 |
| Monofunctional polymerizable monomer | NVC | - | - | - | - | - | 20 | 20 | 20 | 20 | 20 | 20 | 20 | 20 | 20 |
| | IBOA | 1.9 | 6.9 | 30.9 | 41.9 | 46.9 | 26.9 | - | - | - | - | - | - | - | - |
| | PEA | 10.5 | 10.5 | 10.5 | 10.5 | 10.5 | 10.5 | 37.4 | - | - | - | - | - | - | 7.4 |
| | CTFA | - | - | - | - | - | - | - | 37.4 | - | - | - | - | - | - |
| | EOEOEA | - | - | - | - | - | - | - | - | 37.4 | - | - | - | - | - |
| | TBCHA | - | - | - | - | - | - | - | - | - | 37.4 | - | - | - | 30 |
| | CD420 | - | - | - | - | - | - | - | - | - | - | 37.4 | - | - | - |
| | CHA | - | - | - | - | - | - | - | - | - | - | - | 37.4 | - | - |
| | THFA | - | - | - | - | - | - | - | - | - | - | - | - | 37.4 | - |
| Polyfunctional polymerizable oligomer | Tegorad 2010 | - | - | - | - | - | - | - | - | - | - | - | - | - | - |
| | Tegorad 2100 | 0.1 | 0.1 | 0.1 | 0.1 | 0.1 | 0.1 | 0.1 | 0.1 | 0.1 | 0.1 | 0.1 | 0.1 | 0.1 | 0.1 |
| | Tegorad 2700 | - | - | - | - | - | - | - | - | - | - | - | - | - | - |
| Polyfunctional monomer | SR508 | 5 | - | - | - | - | - | - | - | - | - | - | - | - | - |
| | A1000 | 40 | 40 | 16 | 5 | - | - | - | - | - | - | - | - | - | - |
| Resin | BR113 | 1 | 1 | 1 | 1 | 1 | 1 | 1 | 1 | 1 | 1 | 1 | 1 | 1 | 1 |
| Polymerization initiator | TPO | 5 | 5 | 5 | 5 | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 | 5 | 5 | 5 | 5 |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | 1 | 1 | 1 | 1 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 | 0.2 | 0.2 | 0.2 | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 29 | 29 | 29 | 29 | 29 | 29 | 29 | 29 | 29 | 29 | 29 | 29 | 29 | 29 |
| Polyfunctional proportion (mass%) | | 59.7 | 53.1 | 21.3 | 6.8 | 0.1 | 0.1 | 0.1 | 0.1 | 0.1 | 0.1 | 0.1 | 0.1 | 0.1 | 0.1 |
| Monofunctional proportion (mass%) | | 40.3 | 46.9 | 78.7 | 93.2 | 99.9 | 99.9 | 99.9 | 99.9 | 99.9 | 99.9 | 99.9 | 99.9 | 99.9 | 99.9 |

**(Table 12)**

| White ink No. | | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| White mill base | | 30 | 30 | 30 | 30 | 30 | 30 | 30 | 30 | 30 | 30 | 30 | 30 | 30 | 30 |
| Mono functional polymeri zable monomer | NVC | 20 | 20 | 20 | 20 | 20 | 20 | 20 | 20 | 20 | 20 | 20 | 20 | 20 | 20 |
| | IBOA | - | - | - | - | - | - | - | - | - | - | - | - | - | - |
| | PEA | 7.4 | 7.4 | 7.4 | 7.4 | 7.4 | 7.4 | 7.4 | 7.4 | 7.4 | 7.4 | 7.4 | 7.4 | 7.4 | 7.4 |
| | CTFA | - | - | - | - | - | - | - | - | - | - | - | - | - | - |
| | EOEOEA | - | - | - | - | - | - | - | - | - | - | - | - | - | - |
| | TBCHA | 30 | 30 | 30 | 30 | 30 | 33 | 30 | 33 | 30 | 29 | 30 | 30 | 30.1 | 30 |
| | CD420 | - | - | - | - | - | - | - | - | - | - | - | - | - | - |
| | CHA | - | - | - | - | - | - | - | - | - | - | - | - | - | - |
| | THFA | - | - | - | - | - | - | - | - | - | - | - | - | - | - |
| Poly functional polymeri zable oligomer | Tegorad 2010 | 0.1 | - | - | - | - | - | - | - | - | - | - | - | - | - |
| | Tegorad 2100 | - | - | - | - | 0.1 | 0.1 | 0.1 | 0.1 | 0.1 | 0.1 | 0.1 | 0.1 | 0.1 | 1.1 |
| | Tegorad 2700 | - | 0.1 | - | - | - | - | - | - | - | - | - | - | - | - |
| Poly functional monomer | SR508 | - | - | 0.1 | - | - | - | - | - | - | - | - | - | - | - |
| | A1000 | - | - | - | 0.1 | - | - | - | - | - | - | - | - | - | - |
| Resin | BR113 | 1 | 1 | 1 | 1 | 1 | 1 | 1 | 1 | 1 | 1 | 1 | 1 | 1 | - |
| Polymeri zation initiator | TPO | 5 | 5 | 5 | 5 | 10 | - | 5 | - | - | 7 | 5 | 5 | 5 | 5 |
| | Irgacure 819 | 5 | 5 | 5 | 5 | - | 7 | - | - | - | 5 | 5 | 5 | 5 | 5 |
| | Irgacure 184 | - | - | - | - | - | - | 5 | - | - | - | - | - | - | - |
| | Irgacure 369 | - | - | - | - | - | - | - | 7 | - | - | - | - | - | - |
| | Irgacure 907 | - | - | - | - | - | - | - | - | 10 | - | - | - | - | - |
| | ITX | 1 | 1 | 1 | 1 | 1 | 1 | 1 | 1 | 1 | - | 1 | 1 | 1 | 1 |
| Polymeri zation inhibitor | OH-TEMPO | 0.3 | 0.3 | 0.3 | 0.3 | 0.3 | 0.3 | 0.3 | 0.3 | 0.3 | 0.3 | 0.3 | - | 0.4 | 0.3 |
| | UV-12 | 0.2 | 0.2 | 0.2 | 0.2 | 0.2 | 0.2 | 0.2 | 0.2 | 0.2 | 0.2 | 0.2 | 0.5 | - | 0.2 |
| Total (parts by mass) | | 100 | 100 | 100 | 100 | 100 | 100 | 100 | 100 | 100 | 100 | 100 | 100 | 100 | 100 |
| Surface tension (mN/m) | | 23.1 | 22.7 | 29 | 29 | 29 | 29 | 29 | 29 | 29 | 29 | 29 | 29 | 29 | 29 |
| Polyfunctional proportion (mass%) | | 0.1 | 0.1 | 0.1 | 0.1 | 0.1 | 0.1 | 0.1 | 0.1 | 0.1 | 0.1 | 0.1 | 0.1 | 0.1 | 1.4 |
| Monofunctional proportion (mass%) | | 99.9 | 99.9 | 99.9 | 99.9 | 99.9 | 99.9 | 99.9 | 99.9 | 99.9 | 99.9 | 99.9 | 99.9 | 99.9 | 98.6 |

**(Table 13)**

| Clear ink No. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Monofunctional polymerizable monomer | IBOA | 14 | - | 7 | 45 | 70 | 83.2 | 70 | - | - | - | - | 70 | 70 | 70 |
| | NVC | - | - | - | - | - | - | 8.2 | 8.2 | 8.2 | 8.2 | 8.2 | 8.2 | 8.2 | 8.2 |
| | PEA | - | - | - | - | - | - | - | 70 | - | - | - | - | - | - |
| | CTFA | - | - | - | - | - | - | - | - | 70 | - | - | - | - | - |
| | TBCHA | - | - | - | - | - | - | - | - | - | 70 | - | - | - | - |
| | CD420 | - | - | - | - | - | - | - | - | - | - | 70 | - | - | - |
| Polyfunctional polymerizable monomer | SR508 | 44 | 58 | 51 | 13 | - | - | - | - | - | - | - | - | - | - |
| | SR341 | - | - | - | - | - | - | - | - | - | - | - | - | - | - |
| | SR351 | 5 | 5 | 5 | 5 | 5 | - | 5 | 5 | 5 | 5 | 5 | 5 | - | - |
| | SR833 | 20 | 20 | 20 | 20 | 8 | 0.5 | 0.5 | 0.5 | 0.5 | 0.5 | 0.5 | 0.8 | 0.5 | 0.5 |
| | SR454 | - | - | - | - | - | - | - | - | - | - | - | - | 5 | - |
| | SR238 | - | - | - | - | - | - | - | - | - | - | - | - | - | 5 |
| | A1000 | - | - | - | - | - | - | - | - | - | - | - | - | - | - |
| Polyfunctional polymerizable oligomer | Tegorad 2010 | - | - | - | - | - | - | - | - | - | - | - | - | - | - |
| | Tegorad 2100 | 1 | 1 | 1 | 1 | 1 | 0.3 | 0.3 | 0.3 | 0.3 | 0.3 | 0.3 | - | 0.3 | 0.3 |
| | Tegorad 2700 | - | - | - | - | - | - | - | - | - | - | - | - | - | - |
| Polymerization initiator | TPO | 14 | 14 | 14 | 14 | 14 | 14 | 14 | 14 | 14 | 14 | 14 | 14 | 14 | 14 |
| | Irgacure 819 | - | - | - | - | - | - | - | - | - | - | - | - | - | - |
| | Irgacure 184 | - | - | - | - | - | - | - | - | - | - | - | - | - | - |
| | Irgacure 369 | - | - | - | - | - | - | - | - | - | - | - | - | - | - |
| | Irgacure 907 | - | - | - | - | - | - | - | - | - | - | - | - | - | - |
| | ITX | - | - | - | - | - | - | - | - | - | - | - | - | - | - |
| Polymerization inhibitor | OH-TEMPO | - | - | - | - | - | - | - | - | - | - | - | - | - | - |
| | MEHQ | 1 | 1 | 1 | 1 | 1 | 1 | 1 | 1 | 1 | 1 | 1 | 1 | 1 | 1 |
| | UV-12 | 1 | 1 | 1 | 1 | 1 | 1 | 1 | 1 | 1 | 1 | 1 | 1 | 1 | 1 |
| Total (parts by mass) | | 100 | 100 | 100 | 100 | 100 | 100 | 100 | 100 | 100 | 100 | 100 | 100 | 100 | 100 |
| Surface tension (mN/m) | | 29.1 | 29.1 | 29.1 | 29.1 | 29.1 | 29.1 | 29.1 | 29.1 | 29.1 | 29.1 | 29.1 | 33.2 | 29.1 | 29.1 |
| Monofunctional proportion (mass%) | | 16.7 | 0.0 | 8.3 | 53.6 | 83.3 | 99.0 | 93.1 | 93.1 | 93.1 | 93.1 | 93.1 | 93.1 | 93.1 | 93.1 |
| Polyfunctional proportion (mass%) | | 83.3 | 100.0 | 91.7 | 46.4 | 16.7 | 1.0 | 6.9 | 6.9 | 6.9 | 6.9 | 6.9 | 6.9 | 6.9 | 6.9 |

**(Table 14)**

| Clear ink No. | | 15 | 16 | 17 | 18 | 19 | 20 | 21 | 22 | 23 | 24 | 25 |
|---|---|---|---|---|---|---|---|---|---|---|---|---|
| Monofunctional polymerizable monomer | IBOA | 70 | 70 | 70 | 79 | 70 | 79 | 70 | 70 | 70 | 70 | 71.8 |
| | NVC | 8.2 | 8.2 | 8.2 | 8.2 | 8.2 | 8.2 | 8.2 | 8.2 | 8.2 | 8.2 | 8.2 |
| | PEA | - | - | - | - | - | - | - | - | - | - | - |
| | CTFA | - | - | - | - | - | - | - | - | - | - | - |
| | TBCHA | - | - | - | - | - | - | - | - | - | - | - |
| | CD420 | - | - | - | - | - | - | - | - | - | - | - |
| Polyfunctional polymerizable monomer | SR508 | - | - | - | - | - | - | - | - | - | - | - |
| | R34 1 | - | - | - | - | - | - | - | - | - | - | - |
| | SR351 | - | 5 | 5 | 5 | 5 | 5 | 5 | 5 | 5 | 5 | 5 |
| | SR833 | 0.5 | 0.5 | 0.5 | 0.5 | 0.5 | 0.5 | 0.5 | 0.5 | 0.5 | 0.5 | 0.5 |
| | SR454 | - | - | - | - | - | - | - | - | - | - | - |
| | SR238 | - | - | - | - | - | - | - | - | - | - | - |
| | A1000 | 5 | - | - | - | - | - | - | - | - | - | - |
| Polyfunctional polymerizable oligomer | Tegorad 2010 | - | 0.3 | - | - | - | - | - | - | - | - | - |
| | Tegorad 2100 | 0.3 | - | - | 0.3 | 0.3 | 0.3 | 0.3 | 0.3 | 0.3 | 0.3 | 0.3 |
| | Tegorad 2700 | - | - | 0.3 | - | - | - | - | - | - | - | - |
| Polymerization initiator | TPO | 14 | 14 | 14 | - | 7 | - | - | 13.9 | 14 | 14 | 14 |
| | Irgacure 819 | - | - | - | 5 | - | - | - | - | - | - | - |
| | Irgacure 184 | - | - | - | - | 7 | - | - | - | - | - | - |
| | Irgacure 369 | - | - | - | - | - | 5 | - | - | - | - | - |
| | Irgacure 907 | - | - | - | - | - | - | 14 | - | - | - | - |
| | ITX | - | - | - | - | - | - | - | 0.1 | - | - | - |
| Polymerization inhibitor | OH-TEMPO | - | - | - | - | - | - | - | - | - | - | 0.2 |
| | MEHQ | 1 | 1 | 1 | 1 | 1 | 1 | 1 | 1 | - | 2 | - |
| | UV-12 | 1 | 1 | 1 | 1 | 1 | 1 | 1 | 1 | 2 | - | - |
| Total (parts by mass) | | 100 | 100 | 100 | 100 | 100 | 100 | 100 | 100 | 100 | 100 | 100 |
| Surface tension (mN/m) | | 29.1 | 22.7 | 23.1 | 29.1 | 29.1 | 29.1 | 29.1 | 29.1 | 29.1 | 29.1 | 29.1 |
| Monofunctional proportion (mass%) | | 93.1 | 93.1 | 93.1 | 93.8 | 93.1 | 93.8 | 93.1 | 93.1 | 93.1 | 93.1 | 93.2 |
| Polyfunctional proportion (mass%) | | 6.9 | 6.9 | 6.9 | 6.2 | 6.9 | 6.2 | 6.9 | 6.9 | 6.9 | 6.9 | 6.8 |

**(Table 15)**

| | Example | | | | | | | | | | | | | |
|---|---|---|---|---|---|---|---|---|---|---|---|---|---|---|
| No | 1 | 2 | 3 | 4 | 5 | 6 | 7 | 8 | 9 | 10 | 11 | 12 | 13 | 14 |
| Y | 1 | 2 | 3 | 4 | 5 | 6 | 7 | 8 | 9 | 10 | 11 | 12 | 13 | 14 |
| M | 1 | 2 | 3 | 4 | 5 | 6 | 7 | 8 | 9 | 10 | 11 | 12 | 13 | 14 |
| C | 1 | 2 | 3 | 4 | 5 | 6 | 7 | 8 | 9 | 10 | 11 | 12 | 13 | 14 |
| K | 1 | 2 | 3 | 4 | 5 | 6 | 7 | 8 | 9 | 10 | 11 | 12 | 13 | 14 |
| W | 1 | 2 | 3 | 4 | 5 | 6 | 7 | 8 | 9 | 10 | 11 | 12 | 13 | 14 |
| Cl | 7 | 7 | 7 | 7 | 7 | 7 | 7 | 7 | 7 | 7 | 7 | 7 | 7 | 7 |
| Cl/(Y + M + C + K + W) for asperities | 50 | 50 | 50 | 50 | 50 | 50 | 50 | 50 | 50 | 50 | 50 | 50 | 50 | 50 |
| Height (µm) of Cl for asperities | 65 | 65 | 65 | 65 | 65 | 65 | 65 | 65 | 65 | 65 | 65 | 65 | 65 | 65 |
| Cl/(Y + M + C + K + W) for sticking | 10 | 10 | 10 | 10 | 10 | 10 | 10 | 10 | 10 | 10 | 10 | 10 | 10 | 10 |
| Height (µm) of Cl for sticking | 20 | 20 | 20 | 20 | 20 | 20 | 20 | 20 | 20 | 20 | 20 | 20 | 20 | 20 |
| Stretchability | 3 | 3 | 4 | 5 | 5 | 5 | 5 | 5 | 5 | 5 | 5 | 5 | 5 | 5 |
| Ease of forming asperities | 3 | 3 | 3 | 3 | 3 | 3 | 3 | 3 | 3 | 3 | 3 | 3 | 3 | 3 |
| Sticking properties | 5 | 5 | 5 | 5 | 5 | 5 | 5 | 5 | 5 | 5 | 5 | 5 | 5 | 5 |

| | Example | | | | | | | | | | | | | |
|---|---|---|---|---|---|---|---|---|---|---|---|---|---|---|
| No | 15 | 16 | 17 | 18 | 19 | 20 | 21 | 22 | 23 | 24 | 25 | 26 | 27 | 28 |
| Y | 15 | 16 | 17 | 18 | 19 | 20 | 21 | 22 | 23 | 24 | 25 | 26 | 27 | 28 |
| M | 15 | 16 | 17 | 18 | 19 | 20 | 21 | 22 | 23 | 24 | 25 | 26 | 27 | 28 |
| C | 15 | 16 | 17 | 18 | 19 | 20 | 21 | 22 | 23 | 24 | 25 | 26 | 27 | 28 |
| K | 15 | 16 | 17 | 18 | 19 | 20 | 21 | 22 | 23 | 24 | 25 | 26 | 27 | 28 |
| W | 15 | 16 | 17 | 18 | 19 | 20 | 21 | 22 | 23 | 24 | 25 | 26 | 27 | 28 |
| Cl | 7 | 7 | 7 | 7 | 7 | 7 | 7 | 7 | 7 | 7 | 7 | 7 | 7 | 7 |
| Cl/(Y + M + C + K + W) for asperities | 50 | 50 | 50 | 50 | 50 | 50 | 50 | 50 | 50 | 50 | 50 | 50 | 50 | 50 |
| Height (µm) of Cl for asperities | 65 | 65 | 65 | 65 | 65 | 65 | 65 | 65 | 65 | 65 | 65 | 65 | 65 | 65 |
| Cl/(Y + M + C + K + W) for sticking | 10 | 10 | 10 | 10 | 10 | 10 | 10 | 10 | 10 | 10 | 10 | 10 | 10 | 10 |
| Height (µm) of Cl for sticking | 20 | 20 | 20 | 20 | 20 | 20 | 20 | 20 | 20 | 20 | 20 | 20 | 20 | 20 |
| Stretchability | 5 | 5 | 5 | 5 | 5 | 5 | 5 | 5 | 5 | 5 | 5 | 5 | 5 | 5 |
| Ease of forming asperities | 3 | 3 | 3 | 3 | 3 | 3 | 3 | 3 | 3 | 3 | 3 | 3 | 3 | 3 |
| Sticking properties | 5 | 5 | 5 | 5 | 5 | 5 | 5 | 5 | 5 | 5 | 5 | 5 | 5 | 5 |

**(Table 16)**

| | Example | | | | | | | | | | |
|---|---|---|---|---|---|---|---|---|---|---|---|
| No | 29 | 30 | 31 | 32 | 33 | 34 | 35 | 36 | 37 | 38 | 39 |
| Y | 14 | 14 | 14 | 14 | 14 | 14 | 14 | 14 | 14 | 14 | 14 |
| M | 14 | 14 | 14 | 14 | 14 | 14 | 14 | 14 | 14 | 14 | 14 |
| C | 14 | 14 | 14 | 14 | 14 | 14 | 14 | 14 | 14 | 14 | 14 |
| K | 14 | 14 | 14 | 14 | 14 | 14 | 14 | 14 | 14 | 14 | 14 |
| W | 14 | 14 | 14 | 14 | 14 | 14 | 14 | 14 | 14 | 14 | 14 |
| Cl | 2 | 3 | 1 | 4 | 5 | 6 | 8 | 9 | 10 | 11 | 12 |
| Cl/(Y + M + C + K + W) for asperities | 50 | 50 | 50 | 50 | 50 | 50 | 50 | 50 | 50 | 50 | 50 |
| Height (µm) of Cl for asperities | 65 | 65 | 65 | 65 | 65 | 65 | 65 | 65 | 65 | 65 | 65 |
| Cl/(Y + M + C + K + W) for sticking | 10 | 10 | 10 | 10 | 10 | 10 | 10 | 10 | 10 | 10 | 10 |
| Height (µm) of Cl for sticki ng | 20 | 20 | 20 | 20 | 20 | 20 | 20 | 20 | 20 | 20 | 20 |
| Stretchability | 3 | 3 | 4 | 4 | 5 | 5 | 5 | 5 | 5 | 5 | 5 |
| Ease of forming asperities | 3 | 3 | 3 | 3 | 3 | 3 | 3 | 3 | 3 | 3 | 3 |
| Sticking properties | 5 | 5 | 5 | 5 | 5 | 5 | 5 | 5 | 5 | 5 | 5 |

| | Example | | | | | | | | | | |
|---|---|---|---|---|---|---|---|---|---|---|---|
| No | 40 | 41 | 42 | 43 | 44 | 45 | 46 | 47 | 48 | 49 | 50 |
| Y | 12 | 13 | 14 | 15 | 16 | 17 | 18 | 19 | 20 | 21 | 22 |
| M | 12 | 13 | 14 | 15 | 16 | 17 | 18 | 19 | 20 | 21 | 22 |
| C | 12 | 13 | 14 | 15 | 16 | 17 | 18 | 19 | 20 | 21 | 22 |
| K | 12 | 13 | 14 | 15 | 16 | 17 | 18 | 19 | 20 | 21 | 22 |
| W | 12 | 13 | 14 | 15 | 16 | 17 | 18 | 19 | 20 | 21 | 22 |
| Cl | 13 | 14 | 15 | 16 | 17 | 18 | 19 | 20 | 21 | 22 | 23 |
| Cl/(Y + M + C + K + W) for asperities | 50 | 50 | 50 | 50 | 50 | 50 | 50 | 50 | 50 | 50 | 50 |
| Height (µm) of Cl for asperities | 65 | 65 | 65 | 65 | 65 | 65 | 65 | 65 | 65 | 65 | 65 |
| Cl/(Y + M + C + K + W) for sticking | 10 | 10 | 10 | 10 | 10 | 10 | 10 | 10 | 10 | 10 | 10 |
| Height (µm) of Cl for sticki ng | 20 | 20 | 20 | 20 | 20 | 20 | 20 | 20 | 20 | 20 | 20 |
| Stretchability | 5 | 5 | 5 | 5 | 5 | 5 | 5 | 5 | 5 | 5 | 5 |
| Ease of forming asperities | 3 | 3 | 3 | 3 | 3 | 3 | 3 | 3 | 3 | 3 | 3 |
| Sticking properties | 5 | 5 | 5 | 5 | 5 | 5 | 5 | 5 | 5 | 5 | 5 |

**(Table 17)**

| | Example | | | | | | | | | | |
|---|---|---|---|---|---|---|---|---|---|---|---|
| No | 51 | 52 | 53 | 54 | 55 | 56 | 57 | 58 | 59 | 60 | 61 |
| Y | 14 | 14 | 14 | 14 | 14 | 14 | 14 | 14 | 14 | 14 | 14 |
| M | 14 | 14 | 14 | 14 | 14 | 14 | 14 | 14 | 14 | 14 | 14 |
| C | 14 | 14 | 14 | 14 | 14 | 14 | 14 | 14 | 14 | 14 | 14 |
| K | 14 | 14 | 14 | 14 | 14 | 14 | 14 | 14 | 14 | 14 | 14 |
| W | 14 | 14 | 14 | 14 | 14 | 14 | 14 | 14 | 14 | 14 | 14 |
| Cl | 7 | 7 | 7 | 7 | 7 | 7 | 7 | 7 | 7 | 7 | 7 |
| Cl/(Y + M + C + K + W) for asperities | 20 | 30 | 70 | 100 | 200 | 50 | 50 | 50 | 50 | 50 | 50 |
| Height (µm) of Cl for asperities | 35 | 44 | 80 | 100 | 200 | 65 | 65 | 65 | 65 | 65 | 65 |
| Cl/(Y + M + C + K + W) for sticking | 10 | 10 | 10 | 10 | 10 | 0.01 | 1 | 2 | 5 | 12 | 15 |
| Height (µm) of Cl for sticki ng | 20 | 20 | 20 | 20 | 20 | 0.2 | 2 | 4 | 10 | 24 | 28 |
| Stretchability | 5 | 5 | 5 | 4 | 3 | 5 | 5 | 5 | 5 | 5 | 5 |
| Ease of forming asperities | 2 | 2 | 3 | 3 | 3 | 3 | 3 | 3 | 3 | 3 | 3 |
| Sticking properties | 5 | 5 | 5 | 5 | 5 | 3 | 3 | 3 | 4 | 5 | 5 |

| | Example | | | | | | | | | | |
|---|---|---|---|---|---|---|---|---|---|---|---|
| No | 62 | 63 | 64 | 65 | 66 | 67 | 68 | 69 | 70 | 71 | 72 |
| Y | 14 | 14 | 14 | 14 | 14 | 14 | 14 | 14 | 14 | 14 | 14 |
| M | 14 | 14 | 14 | 14 | 14 | 14 | 14 | 14 | 14 | 14 | 14 |
| C | 14 | 14 | 14 | 14 | 14 | 14 | 14 | 14 | 14 | 14 | 14 |
| K | 14 | 14 | 14 | 14 | 14 | 14 | 14 | 14 | 14 | 14 | 14 |
| W | 14 | 14 | 14 | 14 | 14 | 14 | 14 | 14 | 14 | 14 | 14 |
| Cl | 1 | 1 | 1 | 1 | 1 | 1 | 1 | 1 | 1 | 1 | 1 |
| Cl/(Y + M + C + K + W) for asperities | 20 | 30 | 70 | 100 | 200 | 50 | 50 | 50 | 50 | 50 | 50 |
| Height (µm) of Cl for asperities | 35 | 44 | 80 | 100 | 200 | 65 | 65 | 65 | 65 | 65 | 65 |
| Cl/(Y + M + C + K + W) for sticking | 10 | 10 | 10 | 10 | 10 | 0.01 | 1 | 2 | 5 | 12 | 15 |
| Height (µm) of Cl for sticki ng | 20 | 20 | 20 | 20 | 20 | 0.2 | 2 | 4 | 10 | 24 | 28 |
| Stretchability | 5 | 5 | 5 | 3 | 3 | 5 | 5 | 5 | 5 | 5 | 5 |
| Ease of forming asperities | 2 | 2 | 3 | 3 | 3 | 3 | 3 | 3 | 3 | 3 | 3 |
| Sticking properties | 5 | 5 | 5 | 5 | 5 | 3 | 3 | 4 | 5 | 5 | 5 |

**(Table 18)**

| | Example | | | | | | | | |
|---|---|---|---|---|---|---|---|---|---|
| No | 73 | 74 | 75 | 76 | 77 | 78 | 79 | 80 | 81 |
| Y | 14 | 14 | 14 | 14 | 14 | 14 | 14 | 14 | 14 |
| M | 14 | 14 | 14 | 14 | 14 | 14 | 14 | 14 | 14 |
| C | 14 | 14 | 14 | 14 | 14 | 14 | 14 | 14 | 14 |
| K | 14 | 14 | 14 | 14 | 14 | 14 | 14 | 14 | 14 |
| W | 14 | 14 | 14 | 14 | 14 | 14 | 14 | 14 | 14 |
| Cl | 6 | 6 | 6 | 6 | 6 | 6 | 6 | 6 | 6 |
| Cl/(Y + M + C + K + W) for asperities | 20 | 30 | 70 | 100 | 200 | 50 | 50 | 50 | 50 |
| Height (µm) of Cl for asperities | 35 | 44 | 80 | 100 | 200 | 65 | 65 | 65 | 65 |
| Cl/(Y + M + C + K + W) for sticking | 10 | 10 | 10 | 10 | 10 | 0.01 | 1 | 2 | 5 |
| Height (µm) of Cl for sticking | 20 | 20 | 20 | 20 | 20 | 0.2 | 2 | 4 | 10 |
| Stretchability | 5 | 5 | 5 | 5 | 5 | 5 | 5 | 5 | 5 |
| Ease of forming asperities | 2 | 2 | 3 | 3 | 3 | 3 | 3 | 3 | 3 |
| Sticking properties | 5 | 5 | 5 | 5 | 5 | 3 | 3 | 3 | 3 |

| | Example | | | | | | | | |
|---|---|---|---|---|---|---|---|---|---|
| No | 82 | 83 | 84 | 85 | 86 | 87 | 88 | 89 | 90 |
| Y | 14 | 14 | 14 | 14 | 14 | 14 | 14 | 14 | 14 |
| M | 14 | 14 | - | 14 | 14 | 14 | - | 14 | 14 |
| C | 14 | 14 | - | - | 14 | 14 | - | - | 14 |
| K | 14 | 14 | - | - | - | 14 | - | - | - |
| W | 14 | 14 | - | - | - | - | 14 | 14 | 14 |
| Cl | 6 | 6 | 7 | 7 | 7 | 7 | 7 | 7 | 7 |
| Cl/(Y + M + C + K + W) for asperities | 50 | 50 | 50 | 50 | 50 | 50 | 50 | 50 | 50 |
| Height (µm) of Cl for asperities | 65 | 65 | 35 | 40 | 44 | 55 | 40 | 44 | 55 |
| Cl/(Y + M + C + K + W) for sticking | 12 | 15 | 10 | 10 | 10 | 10 | 10 | 10 | 10 |
| Height (µm) of Cl for sticking | 24 | 28 | 20 | 20 | 20 | 20 | 20 | 20 | 20 |
| Stretchability | 5 | 5 | 5 | 5 | 5 | 5 | 5 | 5 | 5 |
| Ease of forming asperities | 3 | 3 | 2 | 2 | 2 | 3 | 2 | 2 | 3 |
| Sticking properties | 5 | 5 | 5 | 5 | 5 | 3 | 3 | 3 | 3 |

**(Table 19)**

| | Comparative Example | |
|---|---|---|
| No | 1 | 2 |
| Y | 1 4 | 14 |
| M | 14 | 14 |
| C | 14 | 14 |
| K | 14 | 14 |
| W | 14 | 14 |
| Cl | 7 | 7 |
| Cl/(Y + M + C + K + W) for asperities | 0 | 0 |
| Height (µm) of Cl for asperities | 0 | 0 |
| Cl/(Y + M + C + K + W) for sticking | 12 | 0 |
| Height (µm) of Cl for sticking | 24 | 0 |
| Stretchability | 5 | 5 |
| Ease of forming asperities | 1 | 1 |
| Sticking properties | 5 | 1 |

The figures given in each of the component columns in Table 3 to Table 14 are expressed as parts by mass. Furthermore, the Cl height (µm) given in Table 15 to Table 19 is the maximum height of projections formed by the clear ink composition. Measurement of this height was carried out using a profile measurement laser microscope VK9700 (Keyence Corporation).

In addition, for Comparative Example 1, evaluation of ease of forming asperities was carried out for a section for sticking.

The substrate surface of a section where asperities were formed by means of the clear layer in each of the molded printed materials (decorative sheet molded products) obtained in Examples 1 to 90 was a surface with various types of textured feel as shown in the evaluation results for the ease of forming asperities.

## Claims

1. A molding process comprising, in order,
a preparation step of preparing a sheet (100) having a textured pattern due to projections (106) formed by curing an ink composition above one face of a substrate (102),
a placement step of placing the face of the sheet (100) having the textured pattern so that it faces a mold (110), and
a molding step of carrying out molding with the sheet (100) and the mold (110) in contact with each other, wherein the sheet (100) is a sheet having an image layer (104) formed by curing a colored ink composition above one face of a substrate (102) and having a textured pattern due to projections (106) formed by curing a clear ink composition above the substrate (102) and/or the image layer (104).

2. The molding process according to claim 1, wherein the projections (106) are non-continuous projections above said one face of the substrate (102).

3. The molding process according to claim 1 or 2, wherein the substrate (102) is transparent.

4. The molding process according to any one of claims 1 to 3, wherein at least some of the projections (106) have a height of at least 30 µm.

5. The molding process according to any one of claims 1 to 4, wherein the sheet (100) comprises, above said one face of the substrate (102), at least a region where projections (106a) having a height of at least 30 µm are formed and a region where projections (106b) having a height of less than 30 µm are formed.

6. The molding process according to any one of claims 1 to 5, wherein the average distance between the projections (106) is 5 to 500 µm.

7. The molding process according to any one of claims 1 to 6, wherein the image layer is a layer formed by curing colored ink compositions of n colors,
and when the mass per unit area of the projections (106) formed by curing a clear ink composition is X (g), and the mass of the image layer (104) per unit area is Y (g), the conditions below are satisfied,
when n = 1, 40/100 < X/Y ≤ 100/100
when n = 2, 30/100 < X/Y ≤ 100/100
when n = 3, 25/100 < X/Y ≤ 100/100
when n = 4, 20/100 < X/Y ≤ 100/100
when n ≥ 5, 15/100 < X/Y ≤ 100/100.

8. The molding process according to any one of claims 1 to 6, wherein the sheet (100) is a sheet having above one face of a substrate (102) at least a region where projections (106a) having a height of at least 30 µm are formed and a region where projections (106b) having a height of less than 30 µm are formed in a scattered manner,
the image layer (104) is a layer formed by curing colored ink compositions of n colors, and
when the mass per unit area of the projections (106) formed by curing the clear ink composition in the region above the sheet where projections (106a) having a height of less than 30 µm are formed in a scattered manner is X' (g), and the mass of the image layer (104) per unit area is Y (g), the conditions below are satisfied
when n = 1, 1/10,000 ≤ X'/Y ≤ 40/100
when n = 2, 1/10,000 ≤ X'/Y ≤ 30/100
when n = 3, 1/10,000 ≤ X'/Y ≤ 25/100
when n = 4, 1/10,000 ≤ X'/Y ≤ 20/100
when n ≥ 5, 1/10,000 ≤ X'/Y ≤ 15/100.

9. The molding process according to any one of claims 1 to 8, wherein the content of a monofunctional polymerizable compound in the colored ink composition is at least 50 mass% of the total mass of polymerizable compound.

10. The molding process according to any one of claims 1 to 9, wherein the colored ink composition comprises at least one monofunctional polymerizable compound selected from the group consisting of (a-1) to (a-8) below as the polymerizable compound 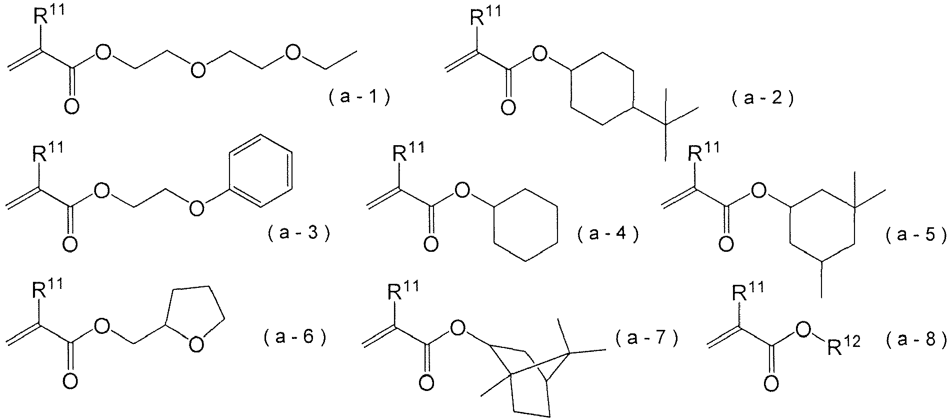 wherein in the Formulae, R¹¹ denotes a hydrogen atom or a methyl group, and R¹² denotes an alkyl group having 4 to 12 carbons.

11. The molding process according to any one of claims 1 to 10, wherein the molding is vacuum forming, pressure forming, or vacuum/pressure forming.

12. A molded printed material (118) obtained by the molding process according to any one of claims 1 to 11.

13. A process for producing an in-mold molded article, comprising
a step of placing the molded printed material (118) according to claim 12 on an inner wall of a cavity formed by a plurality of molds (110), and
a step of injecting a molten resin into the cavity via a gate.

14. An in-mold molded article obtained by the production process according to claim 13.

## Patentansprüche

1. Formungsverfahren aufweisend, in der Reihenfolge,
einen Vorbereitungsschritt des Herstellens eines Flachmaterials (100) mit einem strukturierten Profil aufgrund von Vorsprüngen (106), die ausgebildet wurden durch Härten einer Tintenzusammensetzung über einer Oberfläche eines Substrats (102),
einen Platzierungsschritt des Platzierens der Oberfläche des Flachmaterials (100) mit dem strukturierten Profil dergestalt, dass sie einer Form (110) zugewandt ist, und
einen Formungsschritt des Durchführens des Formens, wobei das Flachmaterial (100) und die Form (110) miteinander in Kontakt sind, wobei das Flachmaterial (100) ein Flachmaterial ist, das eine Bildschicht (104) besitzt, die ausgebildet wurde durch Härten einer farbigen Tintenzusammensetzung über einer Oberfläche eines Substrats (102), und das ein strukturiertes Profil besitzt aufgrund von Vorsprüngen (106), die ausgebildet wurden durch Härten einer farblosen Tintenzusammensetzung über dem Substrat (102) und/oder der Bildschicht (104).

2. Formungsverfahren nach Anspruch 1, wobei die Vorsprünge (106) nicht zusammenhängende Vorsprünge über der einen Oberfläche des Substrats (102) sind.

3. Formungsverfahren nach Anspruch 1 oder 2, wobei das Substrat (102) transparent ist.

4. Formungsverfahren nach einem der Ansprüche 1 bis 3, wobei mindestens einige der Vorsprünge (106) eine Höhe von mindestens 30 µm haben.

5. Formungsverfahren nach einem der Ansprüche 1 bis 4, wobei das Flachmaterial (100) über der einen Oberfläche des Substrats (102) mindestens einen Bereich, in dem Vorsprünge (106a) mit einer Höhe von mindestens 30 µm ausgebildet sind, und einen Bereich, in dem Vorsprünge (106b) mit einer Höhe von weniger als 30 µm ausgebildet sind, aufweist.

6. Formungsverfahren nach einem der Ansprüche 1 bis 5, wobei der durchschnittliche Abstand zwischen den Vorsprüngen (106) 5 bis 500 µm beträgt.

7. Formungsverfahren nach einem der Ansprüche 1 bis 6, wobei die Bildschicht eine Schicht ist, die ausgebildet wurde durch Härten von farbigen Tintenzusammensetzungen mit n Farben,
und wenn die Masse pro Flächeneinheit der Vorsprünge (106), die durch Härten einer farblosen Tintenzusammensetzung ausgebildet wurden, X (g) ist, und die Masse der Bildschicht (104) pro Flächeneinheit Y (g) ist, die Bedingungen unten erfüllt sind,
wenn n = 1, 40/100 < X/Y ≤ 100/100
wenn n = 2, 30/100 < X/Y ≤ 100/100
wenn n = 3, 25/100 < X/Y ≤ 100/100
wenn n = 4, 20/100 < X/Y ≤ 100/100
wenn n ≥ 5, 15/100 < X/Y ≤ 100/100.

8. Formungsverfahren nach einem der Ansprüche 1 bis 6, wobei das Flachmaterial (100) ein Flachmaterial ist, das über einer Oberfläche eines Substrats (102) mindestens einen Bereich, in dem Vorsprünge (106a) mit einer Höhe von mindestens 30 µm ausgebildet sind, und einen Bereich, in dem Vorsprünge (106b) mit einer Höhe von weniger als 30 µm verstreut ausgebildet sind, besitzt,
die Bildschicht (104) eine Schicht ist, die ausgebildet ist durch Härten von farbigen Tintenzusammensetzungen mit n Farben, und
wenn die Masse pro Flächeneinheit der Vorsprünge (106), die durch Härten der farblosen Tintenzusammensetzung in dem Bereich über dem Flachmaterial, in dem Vorsprünge (106a) mit einer Höhe von weniger als 30 µm verstreut ausgebildet sind, X' (g) ist, und die Masse der Bildschicht (104) pro Flächeneinheit Y (g) ist, die Bedingungen unten erfüllt sind,
wenn n = 1, 1/10.000 ≤ X'/Y ≤ 40/100
wenn n = 2, 1/10.000 ≤ X'/Y ≤ 30/100
wenn n = 3, 1/10.000 ≤ X'/Y ≤ 25/100
wenn n = 4, 1/10.000 ≤ X'/Y ≤ 20/100
wenn n ≥ 5, 1 /10.000 ≤ X'/Y ≤ 15/100.

9. Formungsverfahren nach einem der Ansprüche 1 bis 8, wobei der Gehalt einer monofunktionellen polymerisierbaren Verbindung in der farbigen Tintenzusammensetzung mindestens 50 Masse-% der Gesamtmasse an polymerisierbarer Verbindung beträgt.

10. Formungsverfahren nach einem der Ansprüche 1 bis 9, wobei die farbige Tintenzusammensetzung mindestens eine monofunktionelle polymerisierbare Verbindung, die ausgewählt ist aus der Gruppe, die aus (a-1) bis (a-8) unten besteht, als die polymerisierbare Verbindung aufweist 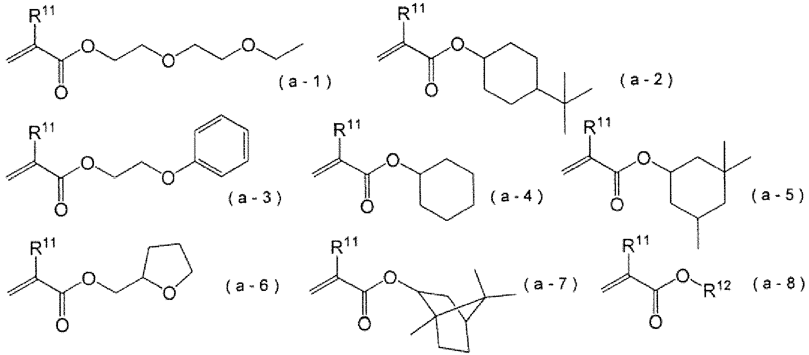 wobei in den Formeln R¹¹ ein Wasserstoffatom oder eine Methylgruppe bezeichnet und R¹² eine Alkylgruppe mit 4 bis 12 Kohlenstoffen bezeichnet.

11. Formungsverfahren nach einem der Ansprüche 1 bis 10, wobei das Formen Vakuumformen, Druckformen oder Vakuum/Druck-Formen ist.

12. Geformtes bedrucktes Material (118), das erhalten wurde durch das Formungsverfahren nach einem der Ansprüche 1 bis 11.

13. Verfahren zur Herstellung eines In-Mold geformtem Gegenstands, aufweisend
einen Schritt des Platzierens des geformten bedruckten Materials (118) nach Anspruch 12 an einer Innenwand eines Hohlraums, der von einer Mehrzahl von Formen (110) gebildet wird, und
einen Schritt des Einspritzens eines geschmolzenen Harzes in den Hohlraum mittels eines Eingusskanals.

14. In-Mold geformter Gegenstand, der erhalten wurde durch das Herstellungsverfahren nach Anspruch 13.

## Revendications

1. Procédé de moulage, comprenant dans cet ordre les étapes suivantes :
une étape de préparation pour préparer une feuille (100) présentant un motif structuré dû à des protubérances (106) formées en durcissant une composition d'encre au-dessus d'une face d'un substrat (102) ;
une étape de placement pour placer la face de la feuille (100) présentant le motif structuré de manière à ce qu'il fasse face au moule (110), et
une étape de moulage pour réaliser le moulage, la feuille (100) et le moule (110) étant en contact l'un avec l'autre, dans lequel la feuille (100) est une feuille présentant une couche d'image (104) formée en durcissant une composition d'encre de couleur au-dessus d'une face d'un substrat (102) et présentant un motif structuré dû à des protubérances (106) formées en durcissant une composition d'encre transparente au-dessus du substrat (102) et/ou de la couche d'image (104).

2. Procédé de moulage selon la revendication 1, dans lequel les protubérances (106) sont des protubérances non continues au-dessus de la une face du substrat (102).

3. Procédé de moulage selon la revendication 1 ou 2, dans lequel le substrat (102) est transparent.

4. Procédé de moulage selon l'une quelconque des revendications 1 à 3, dans lequel au moins certaines des protubérances (106) présentent une hauteur d'au moins 30 µm.

5. Procédé de moulage selon l'une quelconque des revendications 1 à 4, dans lequel la feuille (100) comprend, au-dessus de ladite une face du substrat (102), au moins une région où des protubérances (106a) présentant une hauteur d'au moins 30 µm sont formées, et une région où des protubérances (106b) présentant une hauteur inférieure à 30 µm sont formées.

6. Procédé de moulage selon l'une quelconque des revendications 1 à 5, dans lequel la distance moyenne entre les protubérances (106) s'étend de 5 à 500 µm.

7. Procédé de moulage selon l'une quelconque des revendications 1 à 6, dans lequel la couche d'image est une couche formée en durcissant des compositions d'encre de couleur de n couleurs, et
lorsque la masse par unité de surface des protubérances (106) formées en durcissant une composition d'encre transparente est X(g), et la masse de la couche d'image (104) par unité de surface est Y(g), les conditions ci-dessous sont satisfaites :
lorsque n = 1, 40/100 < X/Y < 100/100 ;
lorsque n = 2, 30/100 < X/Y < 100/100 ;
lorsque n = 3, 25/100 < X/Y < 100/100 ;
lorsque n = 4, 20/100 < X/Y < 100/100, et
lorsque n ≥ 5, 15/100 < X/Y < 100/100.

8. Procédé de moulage selon l'une quelconque des revendications 1 à 6, dans lequel la feuille (100) est une feuille présentant au-dessus d'une face d'un substrat (102) au moins une région où des protubérances (106a) présentant une hauteur d'au moins 30 µm sont formées, et une région où des protubérances (106b) présentant une hauteur inférieure à 30 µm sont formées d'une manière dispersée,
la couche d'image (104) est une couche formée en durcissant des compositions d'encre de couleur de n couleurs, et
lorsque la masse par unité de surface des protubérances (106) formées en durcissant la composition d'encre transparente dans la région au-dessus de la feuille où les protubérances (106a) présentant une hauteur inférieure à 30 µm sont formées de manière dispersée est X'(g), et la masse de la couche d'image (104) par unité de surface est Y(g), les conditions ci-dessous sont satisfaites :
lorsque n = 1, 1/100 < X'/Y < 40/100 ;
lorsque n = 2, 1/100 < X'/Y < 30/100 ;
lorsque n = 3, 1/100 < X'/Y < 25/100 ;
lorsque n = 4, 1/100 < X'/Y < 20/100, et
lorsque n ≥ 5, 1/100 < X'/Y < 15/100.

9. Procédé de moulage selon l'une quelconque des revendications 1 à 8, dans lequel la teneur d'un composé polymérisable monofonctionnel dans la composition d'encre de couleur est égale à au moins 50 % en masse de la masse totale du composé polymérisable.

10. Procédé de moulage selon l'une quelconque des revendications 1 à 9, dans lequel la composition d'encre de couleur comprend au moins un composé polymérisable monofonctionnel sélectionné parmi le groupe consistant en (a-1) à (a-8) ci-dessous comme composé polymérisable : 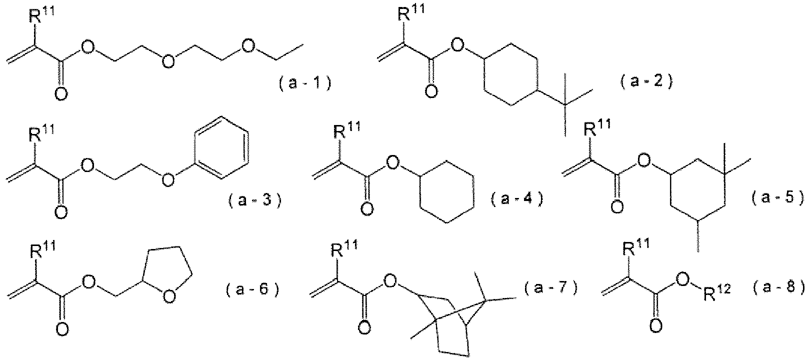 dans lequel dans les formules, R¹¹ indique un atome d'hydrogène ou un groupe méthyle, et R¹² indique un groupe alkyle présentant de 4 à 12 atomes de carbone.

11. Procédé de moulage selon l'une quelconque des revendications 1 à 10, dans lequel le moulage est un formage sous vide, un formage à la presse, ou un formage sous vide/à la presse.

12. Matériau imprimé moulé (118) obtenu par le procédé de moulage selon l'une quelconque des revendications 1 à 11.

13. Procédé destiné à produire un article moulé dans le moule, comprenant les étapes suivantes :
une étape pour placer le matériau imprimé moulé (118) selon la revendication 12 sur une paroi intérieure d'une cavité formée par une pluralité de moules (110), et
une étape pour injecter une résine fondue dans la cavité via une porte.

14. Article moulé dans le moule obtenu par le procédé de production selon la revendication 13.
